# EUROPEAN PATENT APPLICATION

(11) **EP 4 471 474 A1**
(43) Date of publication of application: **04.12.2024**
(21) Application number: 23206306.5
(22) Date of filing: 27.10.2023
(51) Int. Cl.: G02B 6/30, G02B 6/42

(54) **PHOTONIC INTEGRATED CIRCUIT EDGE COUPLING AND FIBER ATTACH UNIT ATTACHMENT STRESS RELIEF**

(30) Priority: 31.05.2023 US 202318326458
(71) Applicant: INTEL Corporation, Santa Clara, CA 95054 (US)
(72) Inventor: Chiu, Chia-Pin, Tempe 85284 (US); Li, Xiaoqian, Chandler 85248 (US); Hosseini, Kaveh, Livermore 94550 (US); Hoang, Tim, San Jose 95123 (US)
(74) Representative: Goddar, Heinz J.

(57) **Abstract**

The substrate of an integrated circuit component comprises a cutout that extends fully or partially through the substrate. An edge of a photonic integrated circuit (PIC) in the integrated circuit component is coplanar with a wall of the cutout or extends into the cutout. An optical fiber in an FAU is aligned with a waveguide within the PIC and the FAU is attached to the PIC edge and an attachment block. The attachment block provides an increased attachment surface area for the FAU. A portion of the FAU extends into the substrate cutout. A stress relief mechanism can secure the fiber optic cable attached to the FAU to the substrate to at least partially isolate the FAU-PIC attachment from external mechanical forces applied to the optical fiber cable. The integrated circuit component can be attached to a socket that comprises a socket cutout into which an FAU can extend.

## Description

### GOVERNMENT RIGHTS

This invention was made with Government support under Agreement No. HR00111830002 awarded by the United States Department of Defense. The Government has certain rights in the invention.

### BACKGROUND

Optical fiber cables (or fiber optic cables) are capable of delivering information via optical signals over great distances at high speeds. For the information carried by optical signals to be processed by electronic integrated circuit components, the information needs to be transferred from the photonic domain to the electrical domain. In some existing approaches, this transfer can comprise an optical signal passing from an optical fiber to a waveguide in a photonic integrated circuit attached to the optical fiber. The photonic integrated circuit THEN translates the optical signal into an electronic signal and passes the electronic signal to an electronic integrated circuit component.

### BRIEF DESCRIPTION OF THE DRAWINGS

FIGS. 1A-1B are perspective views of a portion of a first example integrated circuit component with a substrate cutout to accommodate the coupling of a fiber array unit (FAU) to a photonic integrated circuit (PIC) edge.
FIGS. 1C-1D are top and cross-sectional views of the first example integrated circuit component of FIGS. 1A-1B with the addition of an integrated heat spreader, attachment blocks, and a stress relief mechanism.
FIGS. 2A-2F are top-down views of the first example integrated circuit component of FIGS. 1C-1D at various stages of manufacture.
FIG. 3 is a bottom view of the substrate of the first example integrated circuit component illustrated in FIGS. 2A-2F.
FIG. 4 is a top-down view of a second example integrated circuit component with a substrate cutout to accommodate the coupling of an FAU to an edge of a PIC.
FIG. 5 is a bottom view of the substrate of the second example integrated circuit component illustrated in FIG. 4.
FIGS. 6A-6B illustrate top-down and cross-sectional views of a third example integrated circuit component with a substrate cutout to accommodate the coupling of an FAU to an edge of an integrated EIC-PIC.
FIG. 7 is an example method of forming an integrated circuit component with a substrate cutout to accommodate the coupling of an FAU to an edge of a PIC.
FIG. 8 is a top view of a wafer and dies that may be included in any of the microelectronic assemblies or integrated circuit components disclosed herein.
FIG. 9 is a cross-sectional of an integrated circuit device that may be included in a microelectronic assembly or integrated circuit component, in accordance with any of the embodiments disclosed herein.
FIG. 10 is a cross-sectional side of an integrated circuit device assembly that may include any of the microelectronic assemblies or integrated circuit components disclosed herein.
FIG. 11 is a block diagram of an example electrical device that may include one or more of the microelectronic assemblies or integrated circuit components disclosed herein.

### DETAILED DESCRIPTION

Disclosed herein are integrated circuit component package technologies that provide for coupling between a fiber array unit (FAU) and the edge of a photonic integrated circuit (PIC). Optical fibers in the FAU are aligned with waveguides in the PIC to allow for optical signals to be transmitted between the optical fibers and the waveguides. The substrate of the integrated circuit component (or component substrate) can have a cutout (a hole that extends through the component substrate or a recess that extends partially through the component substrate) that accommodates at least a portion of the FAU. By allowing the FAU to extend into the component substrate, the FAU may not impact the maximum height of the integrated circuit component. For example, in integrated circuit components with an integrated heat spreader (IHS), a top surface of the IHS can be taller than a top surface of the FAU that extends in the z-direction into a component substrate cutout. This can allow for attachment of a thermal management solution, such as a heat sink, to the integrated circuit component that extends over the component substrate cutout without the FAU physically interfering with the thermal management solution. A socket into which an integrated circuit component with a component substrate cutout is placed can have a cutout in the base of the socket (socket cutout) into which an FAU can further extend.

As a PIC's thinness may prevent a robust mechanical attachment between an FAU and a PIC edge due to the PIC edge presenting a small surface area, an attachment block, such as a block of glass, can be attached to the PIC. The PIC edge is substantially flush or coplanar with or extends slightly past an attachment block edge. Together, the attachment block and PIC edges provide a larger surface to which an FAU can attach relative to the PIC edge alone. A stress relief mechanism, such as a retention bar, can be used to secure an optical fiber cable to a component substrate. The retention bar can be fastened or bonded by an adhesive to the component substrate. The retention bar can be bonded by an adhesive to individual optical fibers or optical fiber cables as well. The attachment block and the stress relief mechanism can each have a short enough height so as not to define the maximum height of the integrated circuit component. An integrated circuit component can have multiple component cutouts to accommodate multiple FAUs, and optical cable fibers attached to the multiple FAUs can cross the integrated circuit component substrate perimeter along different edges of the substrate. Thus, in various embodiments, an integrated circuit component comprising PICs can attach to FAUs of optical fiber cables coming in from one, two, three, or all four sides of the integrated circuit component.

Integrated circuit components comprising PICs with substrate cutouts allow PIC-FAU edge couplings to have at least the following advantages. First, they allow for the attachment of FAUs to PICs without impacting the height of the integrated circuit component. As stated above, this allows for the design of thermal management solutions without having to account for the presence of FAUs within the perimeter of the component substrate. Second, the presence of an attachment block provides for a larger surface area for FAU attachment relative compared to the FAU connecting to just a PIC edge. In some existing PICs, the PIC can have a height of 200-700 microns, which can allow for a trench or "lip" to be formed on an edge of the PIC and to which an FAU can be attached. For thinner PICs, particularly for those having a thickness less than the diameter of an optical fiber without a coating (i.e. the diameter of the cladding or the outer reflecting layer, which is typically 125um), the PIC edge can be too thin to allow for alignment and attachment of an optical fiber to a PIC waveguide if a trench is created on the edge of the PIC. The presence of the attachment block can provide for a more robust mechanical connection between the FAU and the integrated circuit component. Third, the addition of a stress relief mechanism that secures the optical fiber cable to the component can at least partially isolate a PIC-FAU attachment from mechanical forces external to the integrated circuit component applied to the optical fiber cable.

In the following description, specific details are set forth, but embodiments of the technologies described herein may be practiced without these specific details. Well-known circuits, structures, and techniques have not been shown in detail to avoid obscuring an understanding of this description. Phrases such as "an embodiment," "various embodiments," "some embodiments," and the like may include features, structures, or characteristics, but not every embodiment necessarily includes the particular features, structures, or characteristics.

Some embodiments may have some, all, or none of the features described for other embodiments. "First," "second," "third," and the like describe a common object and indicate different instances of like objects being referred to. Such adjectives do not imply objects so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact. Furthermore, the terms "comprising," "including," "having," and the like, as used with respect to embodiments of the present disclosure, are synonymous.

Terms modified by the word "substantially" include arrangements, orientations, spacings, or positions that vary slightly from the meaning of the unmodified term. For example, an edge of a PIC that is substantially flush or coplanar with a wall of a component substrate cutout includes an edge of a PIC that is within the placement tolerance of attaching an integrated circuit component to a substrate (e.g., 5-10 microns), a substantially planar surface can include some surface roughness, a sidewall that is substantially perpendicular to a wafer or integrated circuit component surface includes sidewalls that are within 15 degrees of perpendicular to the wafer or integrated circuit component substrate surface and a first integrated circuit component feature that is substantially parallel to a second integrated circuit component feature (e.g., wafer or integrated circuit component substrate surface) includes first features that are within +/- five degrees of the second feature. Moreover, a stated value for a dimension, feature, or characteristic qualified by the term "about" includes values within +/-10% of the stated value. Similarly, a stated range of values for a dimension, feature, or characteristic includes values within 10% of the listed upper and lower values for the range.

Certain terminology may also be used herein for the purpose of reference only, and thus are not intended to be limiting. For example, terms such as "upper," "lower," "above," "below," "bottom," and "top" refer to directions in the Figures to which reference is made. Terms such as "front," "back," "rear," and "side" describe the orientation and/or location of portions of the component within a consistent but arbitrary frame of reference which is made clear by reference to the text and the associated Figures describing the component under discussion. Such terminology may include the words specifically mentioned above, derivatives thereof, and words of similar import.

As used herein, the term "integrated circuit component" refers to a packaged or unpacked integrated circuit product. A packaged integrated circuit component comprises one or more integrated circuit dies mounted on a component substrate. The packaged integrated circuit component may or may not be encapsulated in a casing material, such as metal, plastic, glass, or ceramic. An integrated circuit component comprising multiple integrated circuit dies can be referred to as a multi-chip package (MCP) or multi-chip module (MCM). In one example, a packaged integrated circuit component contains one or more processor units mounted on a component substrate with an exterior surface of the component substrate comprising a solder ball grid array (BGA). In one example of an unpackaged integrated circuit component, a single monolithic integrated circuit die comprises solder bumps attached to contacts on the die. The solder bumps allow the die to be directly attached to a printed circuit board. An integrated circuit component can comprise one or more of any computing system component described or referenced herein or any other computing system component, such as a processor unit (e.g., system-on-a-chip (SoC), processor core, graphics processor unit (GPU), accelerator, chipset processor), I/O controller, memory, or network interface controller.

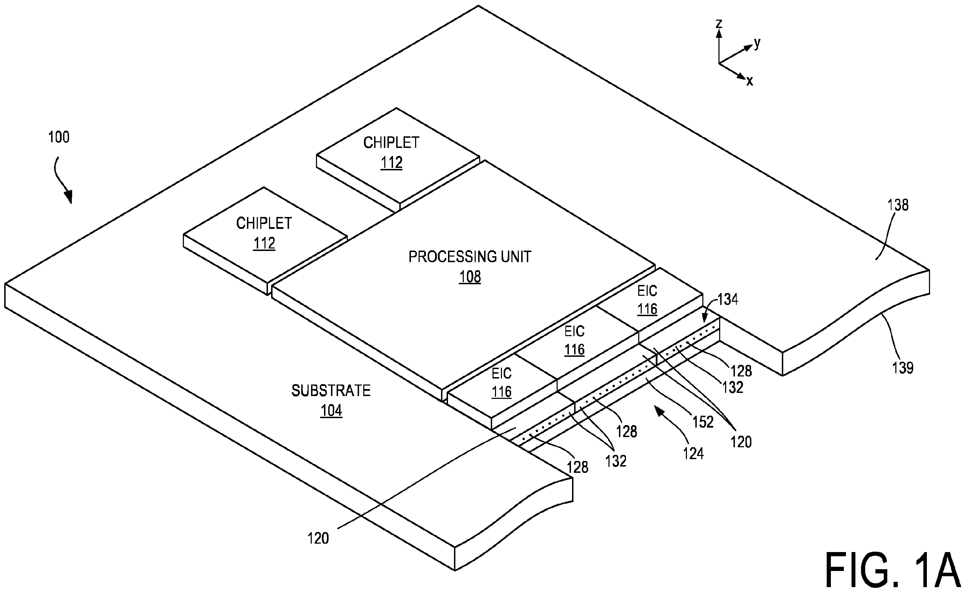

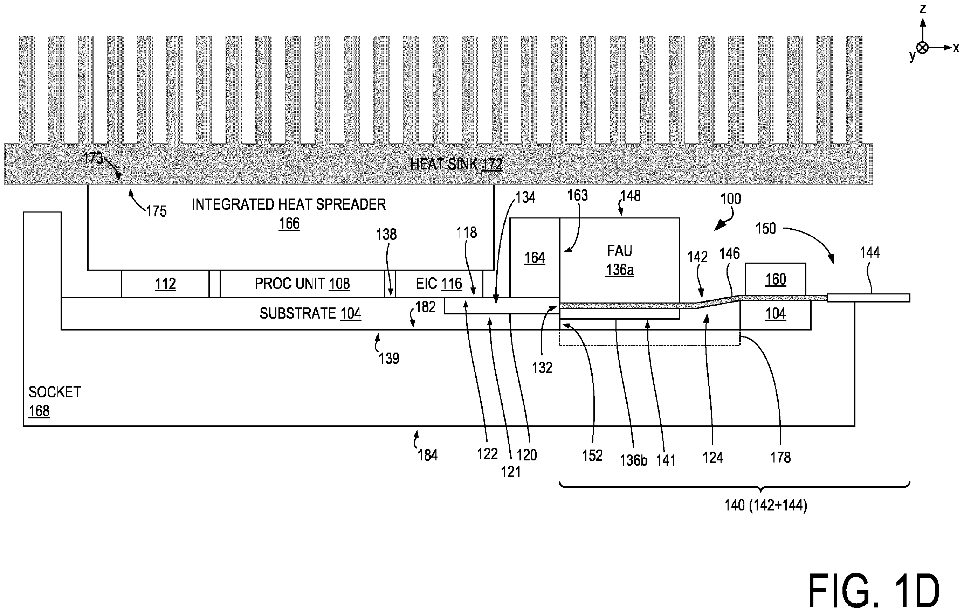

As used herein, the term "edge" can refer to a surface or face of a feature or component. For example, the edge of a photonic integrated circuit (PIC), e.g., edge 132 of PIC 120 in FIGS. 1A and 1D refer to a surface of a PIC.

As used herein, the phrase "conductively coupled" refers to layers or components that are coupled to facilitate the flow of current between the layers or components. For example, a chiplet can be conductively coupled to a processing unit via conductive traces in an interposer embedded in a substrate to which the chiplet and processing unit are attached via conductive contacts, and vias connecting the conductive contacts of the chiplet and the processing unit to the embedded interposer.

Reference is now made to the drawings, which are not necessarily drawn to scale, wherein similar or same numbers may be used to designate same or similar parts in different figures. The use of similar or same numbers in different figures does not mean all figures including similar or same numbers constitute a single or same embodiment. Like numerals having different letter suffixes may represent different instances of similar components. The drawings illustrate generally, by way of example, but not by way of limitation, various embodiments discussed in the present document.

In the following description, for purposes of explanation, numerous specific details are set forth in order to provide a thorough understanding thereof. It may be evident, however, that the novel embodiments can be practiced without these specific details. In other instances, well known structures and devices are shown in block diagram form in order to facilitate a description thereof. The intention is to cover all modifications, equivalents, and alternatives within the scope of the claims

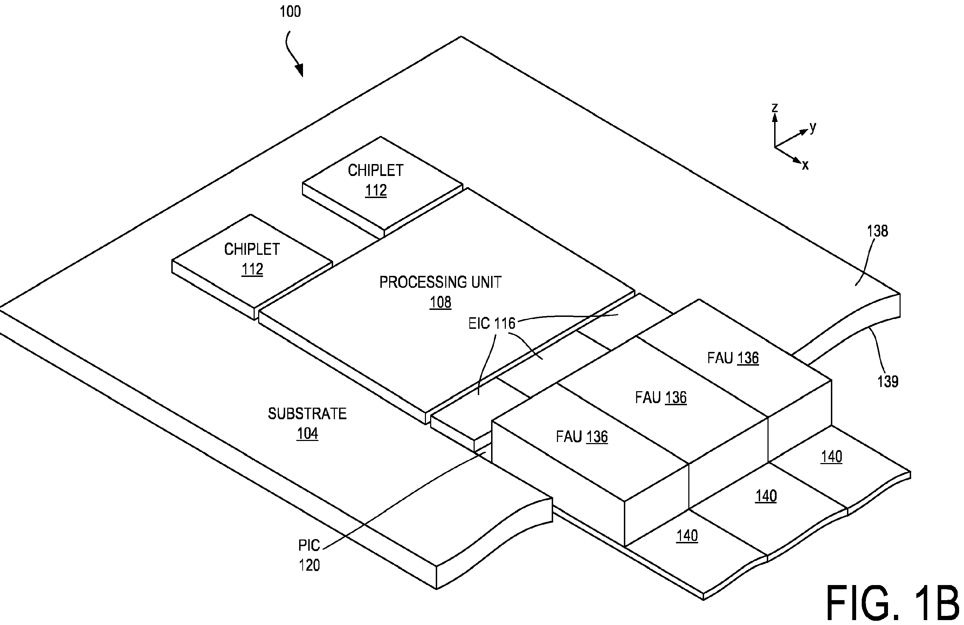

FIGS. 1A-1B are perspective views of a portion of a first example integrated circuit component with a substrate cutout to accommodate the coupling of a fiber array unit (FAU) to a photonic integrated circuit (PIC) edge. FIGS. 1A and 1B illustrate an integrated circuit component 100 with and without FAUs attached, respectively. The integrated circuit component 100 is a multi-chip package comprising various integrated circuit dies attached to a substrate 104 or components embedded in the substrate 104 - a main processing unit 108 (e.g., central processing unit (CPU), graphic processing unit (GPU), advanced processing unit (APU)), chiplets 112, EICs 116, and PICs 120. The integrated circuit dies can be attached to the substrate 104 or components embedded in the substrate 104 by conductive contacts (e.g., pads) on bottom surfaces of the integrated circuit dies attaching to conductive contacts on the surface of the substrate 104 or on the surface of a component embedded in the substrate 104. The substrate 104 comprises a cutout 124, only a portion of which is shown in FIGS. 1A and 1B. The cutout 124 extends through the substrate 104 from a top surface 138 to a bottom surface 139 of the substrate 104. In other embodiments, the cutout 124 extends partially through the substrate 104 from the top surface 138.

The PICs 120 are located in a recess 134 in the top surface 138. Each of the PICs 120 comprises a plurality of waveguides 128 that extend to an edge 132 of a PIC 120. In FIG. 1B, FAUs 136 are attached to the PICs 120. The edges 132 are substantially flush or coplanar with a wall 152 of the cutout 124 or extend in the x-direction into the cutout 124. In some embodiments, the edges 132 of the PICs 120 can extend in the x-direction into the cutout a distance of up to 100 microns. Each FAU 136 is located at an end of an optical fiber cable 140 and allows for optical fibers in the optical fiber cable 140 to attach to and be aligned with waveguides 128 of a PIC 120. A portion of the FAUs 136 extends in the z-direction into the cutout 124. The cutout 124 provides room to allow the FAU 136 to attach to the edge 132 of the PIC 120. In addition, the cutout 124 provides room for the FAU 136 to move freely during alignment of the optical fibers carried by the FAU 136 to the waveguides 128. The chiplets 112 can implement memory, I/O, or other dedicated processing (e.g., graphics processing, accelerators (for machine learning, cryptography, signal processing, etc.)). The substrate 104 can be a printed circuit board or comprise glass, ceramic, or other suitable material. A printed circuit board can comprise one or more layers of non-conductive substrate material, such as an epoxy resin and glass fabric composite (e.g., FR-4) with conductive traces between layers of the non-conductive substrate material.

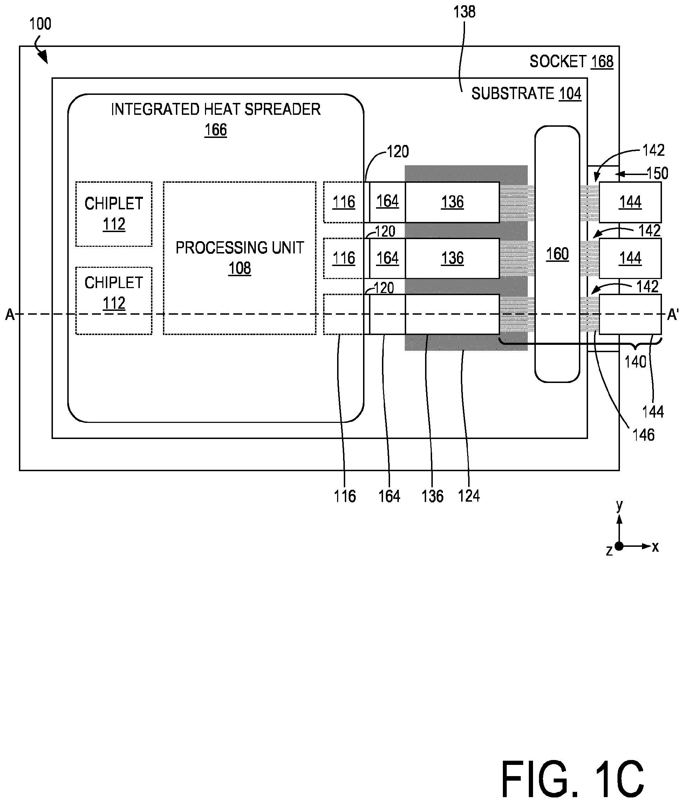

FIGS. 1C-1D are top and cross-sectional views of the first example integrated circuit component of FIGS. 1A-1B with the addition of an integrated head spreader, attachment blocks, a stress relief mechanism, and a socket. FIG. 1D is a cross-sectional view of the integrated circuit component of FIG. 1C taken along the line A-A'. An integrated heat spreader (IHS) 166 covers the main processing unit 108, the chiplets 112, and the EICs 116s. The integrated heat spreader 166 does not cover attachment blocks 164. The heights of the attachment block 164, fiber attach unit 136, and stress relief mechanism 160 are less than that of the integrated heat spreader 166, and the height of the integrated heat spreader 166 thus defines the maximum height of the integrated circuit component 100. Vertical extension of the FAU 136 into the cutout 124 can aid in limiting the amount that the FAU 136 extends from the top surface 138 of the substrate 104 and prevent the FAU 136 from defining the maximum height of the integrated circuit component after attachment of the FAU 136 to the PIC 120.

An EIC 116 attaches to a PIC 120 by attachment of conductive contacts (e.g., pads) on a bottom surface 118 of the EIC to a conductive contact on a top surface 122 of a PIC 120 (by, for example, solder balls). The optical fiber cables 140 comprise individual optical fibers 146 and are illustrated in FIGS. 1C and 1D as comprising a sheathed portion 144 comprising an outer sheath that encapsulates the optical fibers 146 and an unsheathed portion 142 in which the outer sheath is not present. The optical fibers 146 of the unsheathed portion 142 may comprise sheaths that encapsulate the individual optical fibers 146.

A fiber attach unit 136 is located at an end of an optical fiber cable 140 to allow the optical fiber cable 140 to be attached to the integrated circuit component 100 and for optical signals to be transmitted between the optical fibers 146 and the waveguides 128. As can be seen, an FAU 136 encapsulates optical fibers 146, with the optical fibers 146 being positioned vertically between two portions of the FAU 136. That is, a portion of the FAU 136 (136a) is located above the optical fibers 146 and a portion of the FAU 136 (136b) is located below the optical fibers 146. The cutout 124 allows for the optical fibers 146 to be aligned with and attached to the waveguides 128 by providing a volume into which the bottom portion of the FAU 136 (136b) can be located without the FAU 136 physically interfering with the substrate 104. In some embodiments, an FAU comprises one or more ferrules located in a connector body. A ferrule can comprise metal, ceramic, or other suitable material and houses an optical fiber. Although the optical fibers 146 are located closer to a bottom surface 141 of the FAU 136 than a top surface 148 of the FAU 136, in other embodiments, the optical fiber can be located at any position relative to the top and bottom surfaces of an FAU. For example, in some embodiments, an optical fiber can be located closer to or at a top surface of an FAU (such as in lidless fiber arrays) than illustrated in FIG. 1D. In some embodiments, if a bottom surface of the FAU (e.g., 141) extends in the z-direction below a bottom surface of the PIC 120 (e.g., bottom surface 121), the FAU can be attached (by, for example, an epoxy or other adhesive) to a wall of the cutout (e.g., wall 152) below the PIC in addition to being attached to the edge of a PIC and an attachment block. Further, in such embodiments, with a portion of the FAU attached to a wall of the substrate, the height of the attachment block can be made shorter than in embodiments where the FAU is not attached to a substrate wall.

As discussed previously, a fiber attach unit 136 is attached to an edge 132 of a PIC and is aligned with the PIC to allow for the transmission of optical signals between a waveguide of the PIC 120 and an optical fiber 146 carried by the FAU. An FAU 136 can be attached to an edge 132 of a PIC 120 by an optical epoxy, which can have desirable optical characteristics relative to other epoxies, such as a refractive index that substantially matches that of the optical fibers and the PIC waveguides, high transparency, low shrinkage, and low outgassing post-cure. The attachment blocks 164 provide for an increased surface area for an FAU 136 to attach to and create a stronger mechanical attachment with the integrated circuit component 100. An edge 163 of an attachment block 164 is substantially flush or coplanar with the edge 132 of an underlying PIC 120. In some embodiments, the edge 132 of the PIC 120 can extend in the x-direction past the edge 163 of the attachment block 164 into the cutout 124 by a small amount (e.g., 10-20 microns). In some embodiments, an attachment block 164 can be attached to a PIC 120 while in other embodiments, an attachment block 164 can attach to the substrate 104 or another component of the integrated circuit component 100. Further, multiple FAUs can attach to a single attachment block. For example, in a variation of the integrated circuit component 100 illustrated in FIGS. 1C-1D, the three attachment blocks 164 are replaced with a single attachment block to which three FAUs attach. The attachment blocks can comprise glass, plastic, ceramic, metals, alloys, or another suitable material. The attachment block material can be chosen to have a coefficient of thermal expansion that substantially matches (e.g., within 30%) the coefficient of thermal expansion of one or more components to which the attachment block is attached (e.g., FAU, PIC, or substrate) and/or materials used to attach to the attachment block (e.g., epoxies) to another component. In some embodiments, the coefficient of thermal expansion of the attachment block can be in a range of 2-25 microns/K to mitigate warpage of the PIC edge. The portion of the FAU 136 that attaches to the attachment block 164 can attach via an epoxy or another suitable adhesive. In some embodiments, the FAU 136 can be attached to the attachment block 164 with the optical epoxy used to attach the FAU 136 to the PIC 120, or a different epoxy (such as a mechanical epoxy) than used to attach the FAU 136 to the PIC 120.

The stress relief mechanism 160 secures the optical fiber cable 140 to the substrate 104. The stress relief mechanism 160 can be a retention bar, such as a bar comprising metal, plastic, or another suitable material. The stress relief mechanism 160 (including retention bar implementations) can take any suitable shape and be attached by one or more fasteners (e.g., clips, screws) or an adhesive (e.g., epoxy) to the substrate 104. The stress relief mechanism 160 is illustrated in FIGS. 1C-1D as securing the unsheathed optical fibers to the substrate 104, but in other embodiments, the stress relief mechanism 160 can secure sheathed portions of optical fibers to the substrate 104. In some embodiments, the stress relief mechanism 160 can be attached via adhesive to the optical fiber cable 140 in addition to being attached to the substrate 104.

As illustrated in FIG. 1D, the attachment blocks 164, FAUs 136, and stress relief mechanism 160 extend in the z-direction from the top surface 138 of the substrate 104 to a lesser extent than the integrated heat spreader 166. That is, the integrated heat spreader 166 defines a maximum height of the integrated circuit component 100. This allows for a thermal management solution, such as a heat sink or a cold plate, to attach to the integrated heat spreader 166 and extend in the x-direction over at least a portion of the cutout 124 without being physically interfered with by the FAUs 136, stress relief mechanism 160, or attachment blocks 164. This is illustrated by the presence of heat sink 172 in FIG. 1D. The heat sink has a substantially planar bottom surface 173 that is attached to a top surface 175 of the integrated heat spreader 166 by, for example, a thermal interface material (TIM) layer (which can comprise a silver thermal compound, thermal grease, phase change materials, indium foils, graphite sheets, liquid metal, or solders). The heat sink 172 extends in the x-direction out past the integrated heat spreader 166, along the width of the cutout 124, and out past the perimeter of a socket 168 to which the integrated circuit component 100 is attached. In other embodiments, a thermal management solution can extend over just a portion of the substrate cutout. The integrated heat spreader 166 can comprise aluminum, copper, silver, ceramic, or another suitable conductive material. If the thermal management solution is a cold plate, the cold plate can be any suitable type of cold plate, such as a tubed cold plate or a cold plate comprising internal fins or channels (e.g., microchannels) and be made of any suitable material, such as copper, aluminum, or stainless steel that is chemically compatible with immersion and working fluids.

An additional advantage of an integrated circuit component 100 connected to a fiber attach unit as shown in FIGS. 1C-1D is that, by having the FAU 136 and the stress relief mechanism 160 within the perimeter of the substrate 104, socket design, integrated circuit package, and component manufacturing and handling may all be simplified.

The integrated circuit component 100 is attached to the socket 168 via a ball grid array (BGA), land grid array (LGA), or other suitable manner. The socket 168 has a cutout 150 along one of its walls through which the optical fiber cable 140 passes. In some embodiments, the socket 168 can comprise a socket cutout (represented by dashed line 178) that at least partially overlaps with the cutout 124 and into which an FAU can further extend once attached or in which the FAU can be moved during alignment. A socket cutout can extend through the socket from a top surface 182 of the socket to a bottom surface 184 of the socket or partially through the socket from the top surface 182.

Although FIGS. 1A-1D illustrate an integrated circuit component comprising a single substrate cutout that allows FAUs to edge-attach to PICs in the component, in other embodiments, an integrated circuit component can comprise multiple substrate cutouts. The multiple substrate cutouts can be located to accommodate optical fiber cables crossing one edge (as illustrated in FIGS. 1A-1D) or multiple edges of the perimeter of the integrated circuit component substrate. The optical fibers in an FAU entering from different sides of an integrated circuit component can attach to PICs having edges that are substantially flush or coplanar with or extend in the x-direction into a substrate cutout. For example, in a variation of the embodiment illustrated in FIGS. 1A-1D, the cutout 124 could be three separate cutouts with each cutout accommodating one FAU. In another example, substrate cutouts can be located to accommodate optical fiber cables crossing the integrated circuit component substrate perimeter at two, three, or four edges of the integrated circuit component substrate perimeter. Component substrate cutouts can be of any suitable shape that allows for FAUs to be attached to PICs and for optical fibers in an FAU to be aligned to PIC waveguides and are not limited to the rectangular shape illustrated in FIGS. 1A-1D.

In FIGS. 1A-1D, the PICs 120 are located in a recess 134 in the top surface 138 of the substrate 104 and a PIC 120 is attached to an EIC 116 by conductive contacts on the top surface 122 of the PIC being attached to conductive contacts on the bottom surface 118 of the EIC by, for example, solder balls or other suitable attachment. PICs embedded in a recess in the surface of the integrated circuit component substrate can be referred to as open-cavity PICs (OCPICs). In other embodiments, the PICs can be partially embedded in the top surface of the integrated circuit component substrate. In other embodiments, PICs can be located on the same surface of a component substrate as the EIC and other integrated circuit components. For example, the PIC 120 could be located on the top surface 138 of the substrate, along with the EIC 116, the main processing unit 108, and the chiplets 112. In such embodiments, a bridge or interposer embedded in the substrate 104 can carry signals between the PIC and the EIC. Such a bridge or interposer could be embedded in the component substrate (either fully embedded or with a top surface exposed). Bridges or interposers can be used to carry signals between other components of the integrated circuit component 100, such as between the EIC and the main processing circuit, a chiplet and the main processing circuit, between chiplets, etc. A bridge or interposer can comprise silicon and one or more layers of conductive traces to carry signals between integrated circuit component components. Conductive traces on different layers can be connected by vias and conductive traces on a top surface of the bridge or interposer can connect to an integrated circuit component via direct attachment (e.g., via a solder ball or other conductive contact) if the top surface of the bridge or interposer is not embedded in the substrate, or by a via that extends from a conductive contact on the top surface of the bridge or interposer to a conductive contact on the top of the component substrate and to which a conductive contact of the integrated circuit component can attach (by, for example, solder balls). In some embodiments, a bridge or interposer can be an implementation of Intel^{®} embedded multi-die interconnect bridge (EMIB) technology.

Any of the PICs described herein (e.g., 120) can comprise one or more optical components, such as a laser (or another light source), photodetectors, micro-ring resonators (for optical signal encoding and decoding), waveguides, combiners, couplers, gratings, wavelength filters, phase shifters, and optical switches. A PIC can comprise a bulk silicon or SOI (silicon-on-insulator) substrate upon which one or more optical components are integrated. In embodiments where the PIC comprises a laser comprising III-V materials, such as a laser comprising InP (indium phosphide), GaSb (gallium antimonide), InP/GaAs (indium phosphide and gallium arsenide), or GeSn (germanium tin), the laser can be fabricated separately from the PIC and integrated with the PIC using flip-chip, epitaxial bonding, micro-transfer printing, or another suitable integration approach. A waveguide in any of the PICs described or referenced herein can comprise a core comprising silicon and cladding comprising silicon dioxide (SiO₂). In other embodiments, the core can comprise silicon or silicon nitride (SiNₓ, e.g., Si₃N₄), and the cladding can comprise silicon dioxide (SiO₂). In yet other embodiments, the waveguide can comprise a multilayer system. In one example, a multilayer waveguide can comprise a layer comprising silicon, a layer comprising silicon nitride (SiNₓ), and a layer comprising germanium. In some embodiments, a PIC comprises one or more electronic integrated circuits or devices, such as a transistor (e.g., a planar or non-planar MOSFET).

Any of the EICs described herein (e.g., 116) can comprise one or more integrated circuits to enable communication and data transfer between the electronic and photonic domains. An EIC can comprise, for example, one or more of the following: driver circuitry (e.g., amplifiers, digital-to-analog converters) to generate electronic signals that are used to drive PIC components, receiver circuitry (e.g., amplifiers, analog-to-digital converters) to receive and process photonic signals received from the PIC, wavelength converters, optical couplers to couple light into and out of the PIC, and power management circuitry that provides power to the PIC and manages PIC power consumption.

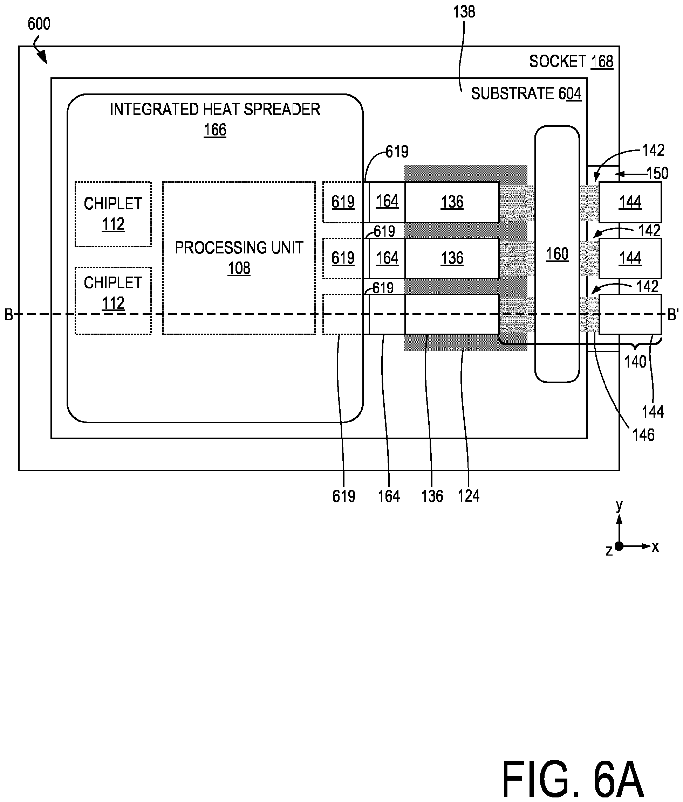

Although the EICs are illustrated in FIGS. 1A-1D as being separate integrated circuit components, in some embodiments, some or all EIC functionality can be incorporated into a processing unit (e.g., 108), chiplet (e.g., 112), or another integrated circuit component that implements functionality other than enabling communication and data transfer between the electronic and photonic domains. In other embodiment, such as the embodiment illustrated in FIGS. 6A-6B, EIC functionality can be integrated into the same integrated circuit die as one or more optical components.

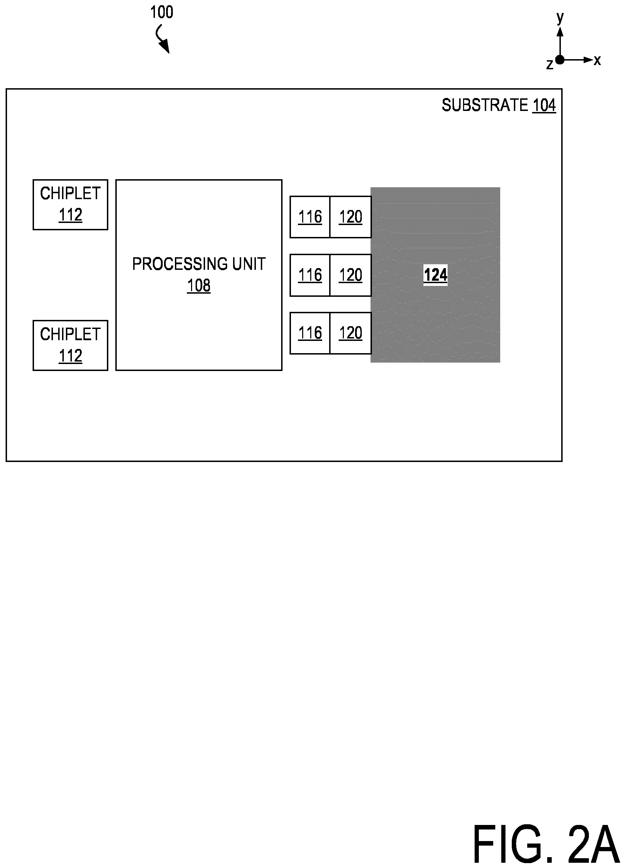

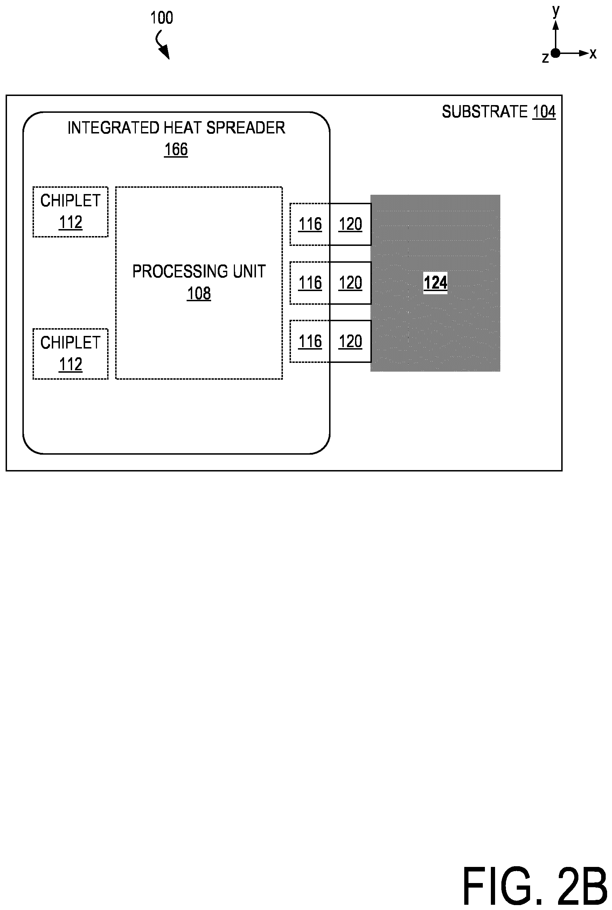

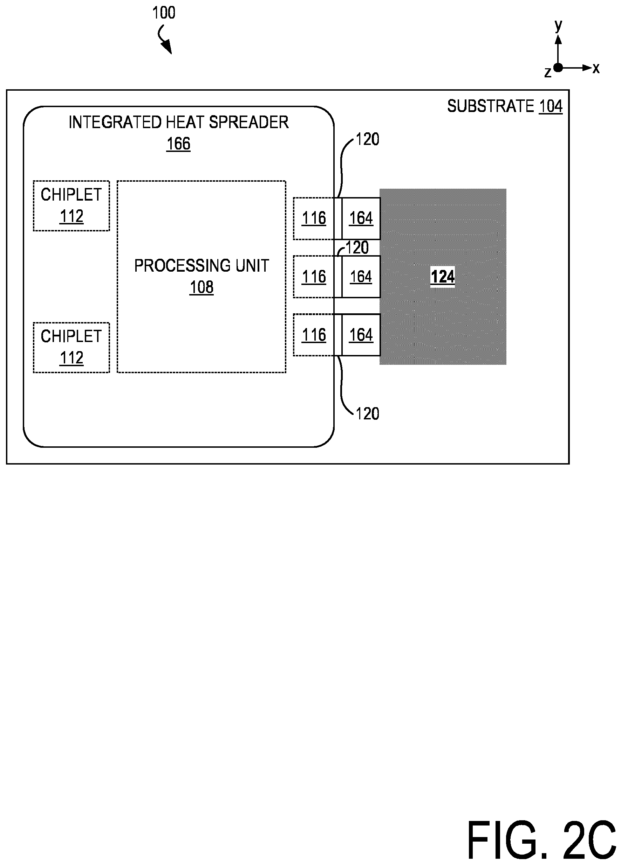

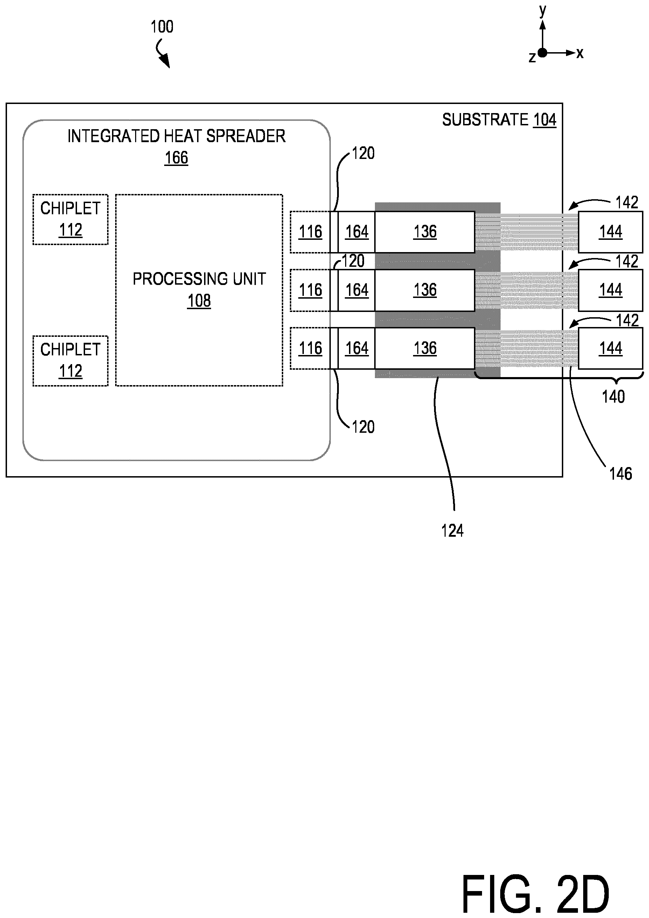

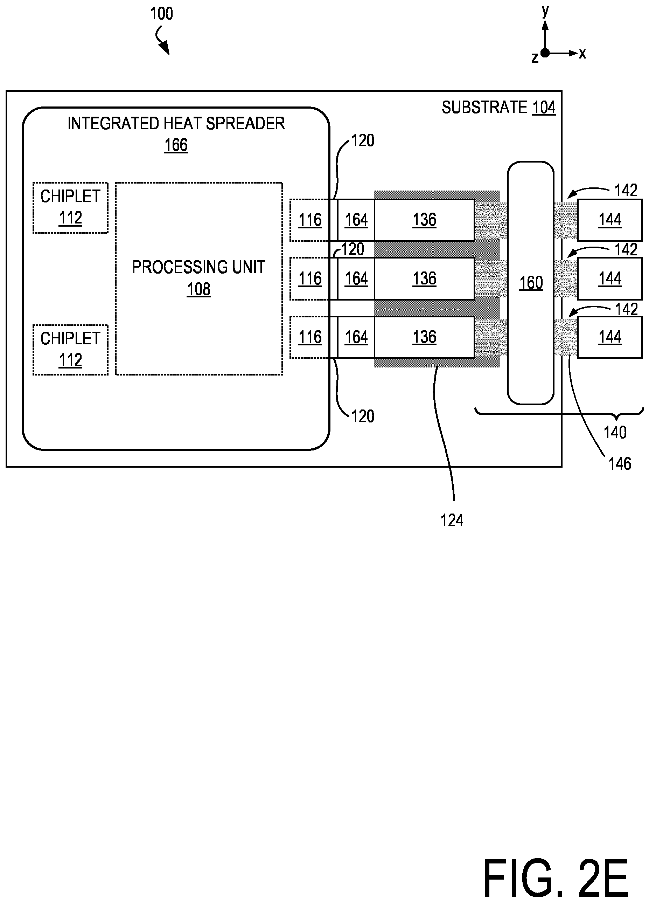

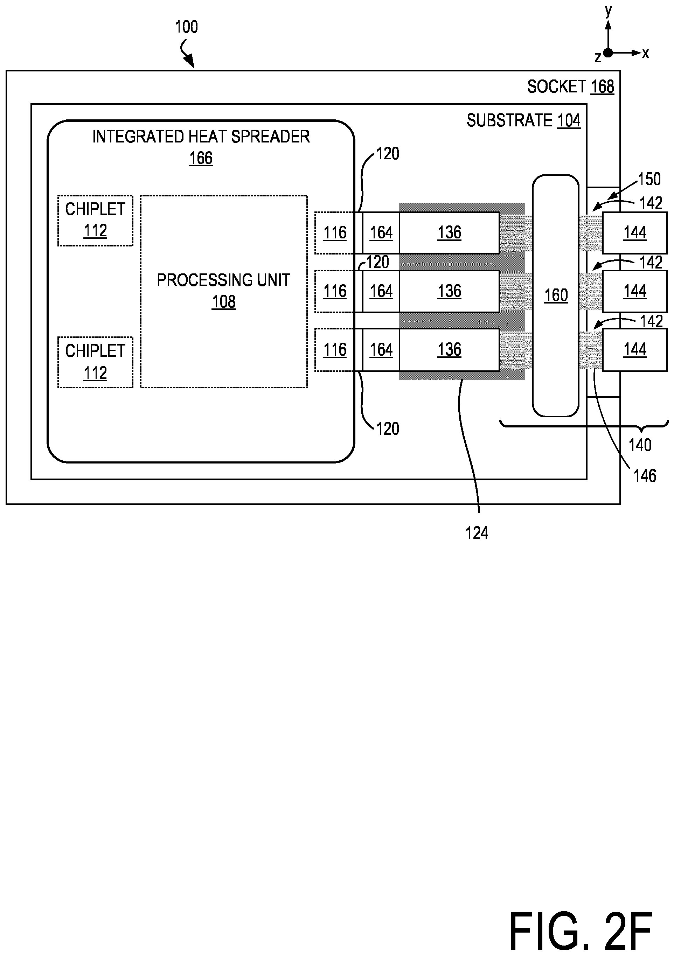

FIGS. 2A-2F are top-down views of the first example integrated circuit component of FIGS. 1C-1D at various stages of manufacture. FIG. 2A illustrates the integrated circuit component 100 after attachment of the main processing unit 108, chiplets 112, EICs 116, and PICs 120 to the substrate 104, and formation of the cutout 124 in the substrate 104. FIG. 2B illustrates the integrated circuit component 100 after attachment of the integrated heat spreader 166 to the main processing unit 108, chiplets 112, and EICs 116 with a thermal interface material layer. FIG. 2C illustrates the integrated circuit component 100 after attachment of an attachment block 164 to each of the PICs 120. FIG. 2D illustrates the integrated circuit component 100 after alignment of optical fibers 146 of optical fiber cables 140 to waveguides in the PICs 120, and attachment of FAUs 136 to attachment blocks 164 and PICs 120. FIG. 2E illustrates the integrated circuit component 100 after attachment of a stress relief mechanism 160 to the substrate 104 to secure optical fibers 146 to the substrate 104. FIG. 2F illustrates the integrated circuit component 100 after being attached (e.g., inserted or plugged) into a socket 168.

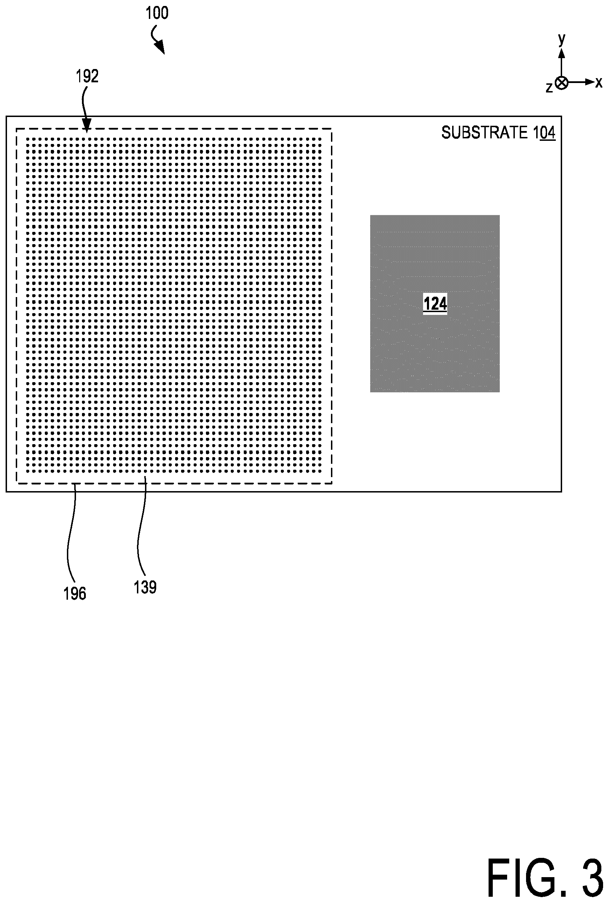

FIG. 3 is a bottom view of the substrate of the first example integrated circuit component illustrated in FIGS. 1C-1D. The bottom surface 139 of the substrate 104 comprises pins 192 (which could be solder balls, pads, or other conductive contacts) located within a rectangular bounding box 196. The bounding box 196 encloses the areas occupied by integrated circuit components attached to the top surface 138 of the substrate. In other embodiments, the area occupied by the integrated circuit component attached to the top surface 138 of the component substrate can extend past one or more edges of the bounding box 196.

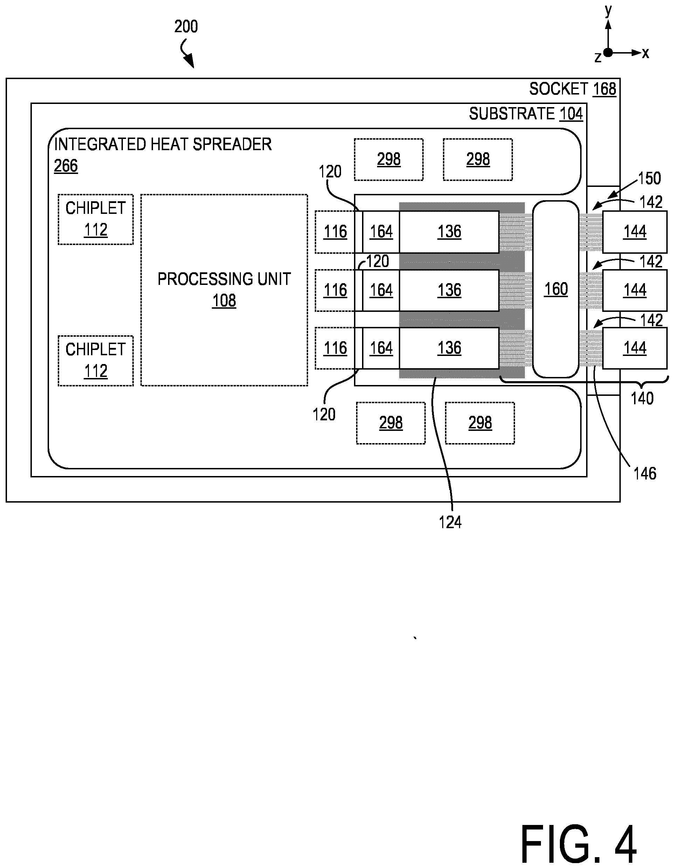

FIG. 4 is a top-down view of a second example integrated circuit component with a substrate cutout to accommodate the coupling of an FAU to an edge of a PIC. The component 200 is similar to the integrated circuit component 100 (with similar parts having the same numbers as FIGS. 2A-2F) but with a U-shaped integrated heat spreader 266 surrounding the cutout 124 on three sides (top, left, bottom). The integrated heat spreader 266 can cover processing units 298 (which can be any processing unit described herein (e.g., CPU, GPU, accelerator, chiplet, EIC)) located above and below the cutout 124 in addition to the main processing unit 108, chiplets 112, and EICs 116.

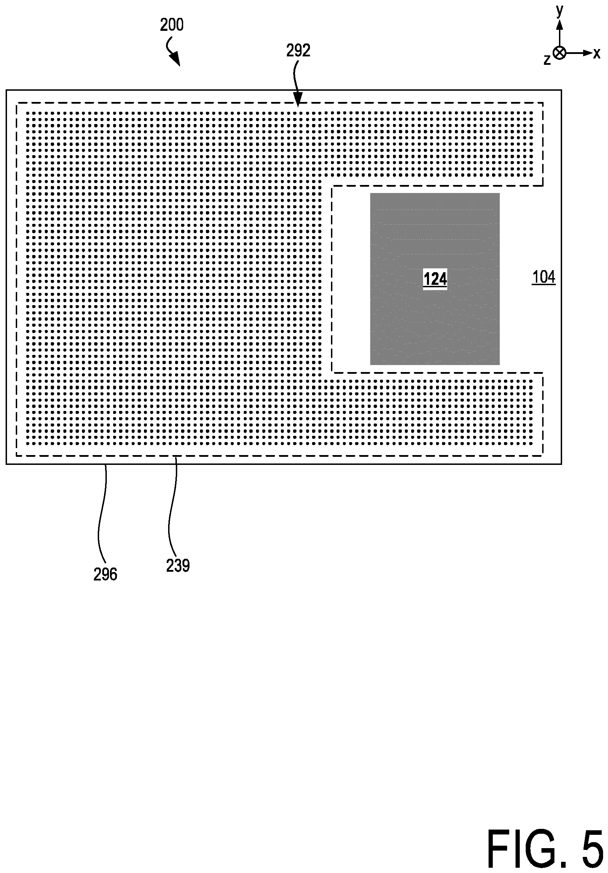

FIG. 5 is a bottom view of the substrate of the second example integrated circuit component illustrated in FIG. 4. The bottom surface 239 of the substrate 104 comprises pins 292 (which could be solder balls, pads, or other conductive contacts) located within a U-shaped bounding box 296. The U-shaped area collectively occupied by the pins 292 extends into the substrate regions located above and below the cutout 124 to accommodate a larger pin count. The bounding box 296 encloses the areas occupied by integrated circuit components attached to the front side of the substrate. In embodiments where processing units are attached to the substrate in regions of the substrate above and below the cutout 124 (e.g., processing units 298), the bounding box 296 can enclose the areas occupied by the processing units 298. In some embodiments, the area occupied by the integrated circuit component attached to the front side of the component substrate can extend past one or more edges of the bounding box 296.

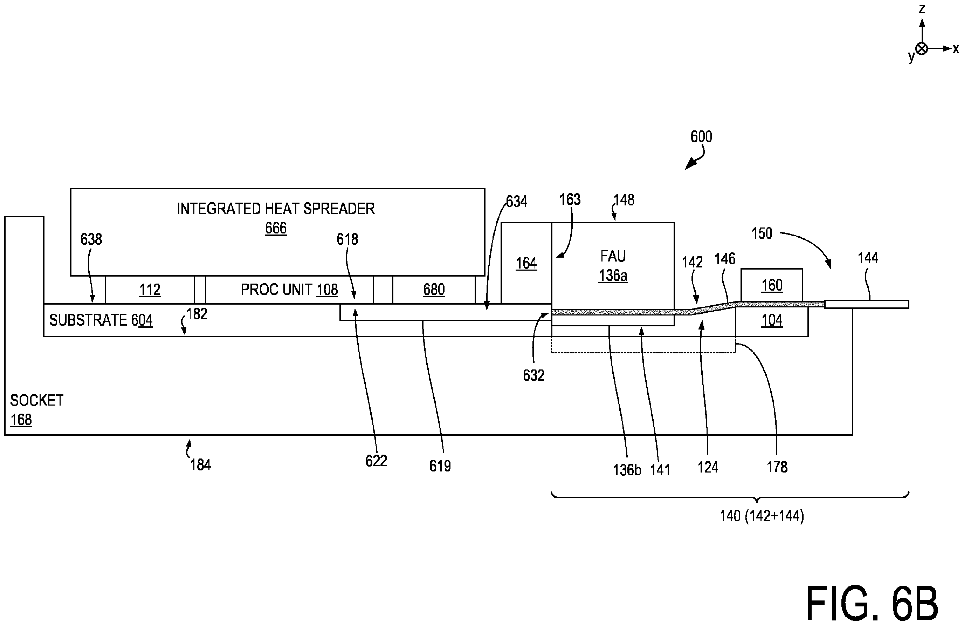

FIGS. 6A-6B illustrate top-down and cross-sectional views of a third example integrated circuit component with a substrate cutout to accommodate the coupling of an FAU to an edge of a PIC. FIG. 6B is a cross-sectional view of the integrated circuit component 600 of FIG. 6A taken along the line B-B'. The component 600 is similar to the integrated circuit component 100 of FIGS. 1C-1D (with similar parts in FIGS. 6A-6B having the same numbers as FIGS. 1C-1D) but with EIC functionality integrated into PIC 619. The PIC 619 with integrated EIC functionality can be located in a recess 634 in a top surface 638 of the substrate 604. The PIC 619 with integrated EIC functionality can be referred to as an open-cavity EIC-PIC (OC-EIC/PIC).

An integrated heat spreader (IHS) 666 covers the main processing unit 108 and the chiplets 112, but not the cover attachment blocks 164. The heights of the attachment block 164, fiber attach unit 136, and stress relief mechanism 160 are less than that of the integrated heat spreader 666, and the height of the integrated heat spreader 666 thus defines the maximum height of the integrated circuit component 600. Vertical extension of the FAU 136 into the cutout 124 can aid in limiting the amount that the FAU 136 extends from the top surface 638 of the substrate 604 and prevent the FAU 136 from defining the maximum height of the integrated circuit component after attachment of the FAU 136 to the PIC 120. In some embodiments, the component 600 can comprise a pedestal 680 extending from the integrated heat spreader 666 to the PIC 619 or a layer of thermal interface material (e.g., thermal pad or thermal gap filler) 680 located between the integrated heat spreader 666 and the PIC 619 to assist in the dissipation of heat generated by the PIC 619.

The PIC 619 attaches to the processing unit 108 by conductive contacts (e.g., pads) on a bottom surface 618 of the processing unit attaching (by, for example, solder balls or bumps) to conductive contacts on a top surface 622 of the PIC 619. The fiber attach unit 136 attaches to the edge 632 of the PIC 619 and the attachment block 164. The edge 163 of the attachment block 164 is substantially flush or coplanar with the edge 632 of the underlying PIC 619. In some embodiments, the edge 632 of the PIC 619 extends past the edge 163 of the attachment block 164 into the cutout 124 by a small amount (e.g., 10-20 microns).

In FIGS. 6A-6B, the PIC 619 is located in a recess 634 in the top surface 638 of the substrate 604 and the PIC 619 is attached to the processing unit 108 by conductive contacts on the top surface 622 of the PIC 619 (PIC conductive contacts) being attached to conductive traces on the bottom surface 618 of the processing unit 108 (processing unit conductive contacts) by, for example, solder balls, solder bumps or other suitable attachment. In other embodiments, PICs integrating EIC functionality can be located on the same surface of a component substrate as other integrated circuit components. For example, the PIC 619 could be located on the top surface 638 of the substrate 604 along with the main processing unit 108 and the chiplets 112. In such embodiments, a bridge or interposer embedded in the substrate 604 can carry signals between the PIC 619 and the processing unit 108. Such a bridge or interposer could be embedded in the component substrate (either fully embedded or with a top surface exposed).

The integrated circuit components comprising substrate cutouts to accommodate the attachment of FAUs to PICs in the integrated circuit components disclosed herein can be attached (via a socket or direct-attached) to a printed circuit board (or motherboard, mainboard). In some embodiments, one or more additional integrated circuit components or other components (e.g., battery, processor unit, memory integrated circuit component) can be attached to the printed circuit board. In some embodiments, the printed circuit board to which the integrated circuit component disclosed herein can be located in a computing system that comprises a housing that encloses the printed circuit board.

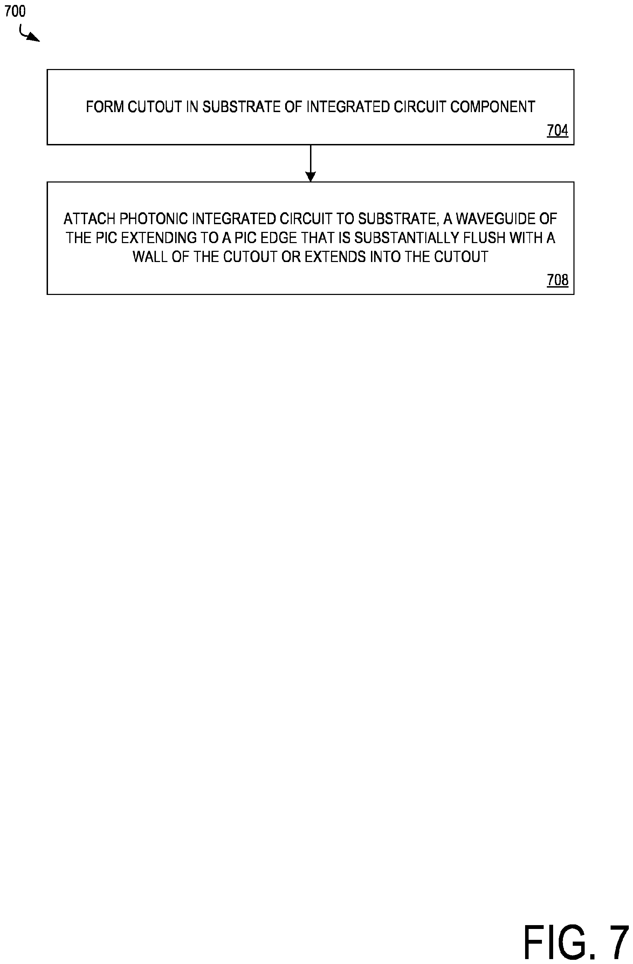

FIG. 7 is an example method of forming an integrated circuit component with a substrate cutout to accommodate the coupling of an FAU to an edge of a PIC. The method can be performed by an integrated circuit component manufacturer. At 704, a cutout is formed in a substrate of an integrated circuit component. At 708, a photonic integrated circuit (PIC) and an electronic integrated circuit (EIC) are attached to the substrate, the EIC comprising an EIC conductive contact on a surface of the EIC, the PIC comprising a waveguide and a PIC conductive contact on a surface of the PIC, the waveguide extending to an edge of the PIC, the EIC conductive contact conductively coupled to the PIC conductive contact, the edge of the PIC substantially flush with a wall of the cutout or extending into the cutout.

In other embodiments, the method 700 can comprise one or more additional elements. For example, the method 700 can further comprise attaching an attachment block to the PIC. In another example, the method 700 can further comprise attaching a fiber attach unit to the attachment block and the edge of the PIC, a portion of the fiber attach unit extending into the cutout. In yet another example, the fiber attach unit is located at the end of an optical fiber cable and the method 700 further comprises securing the optical fiber unit to the substrate with a retaining bar.

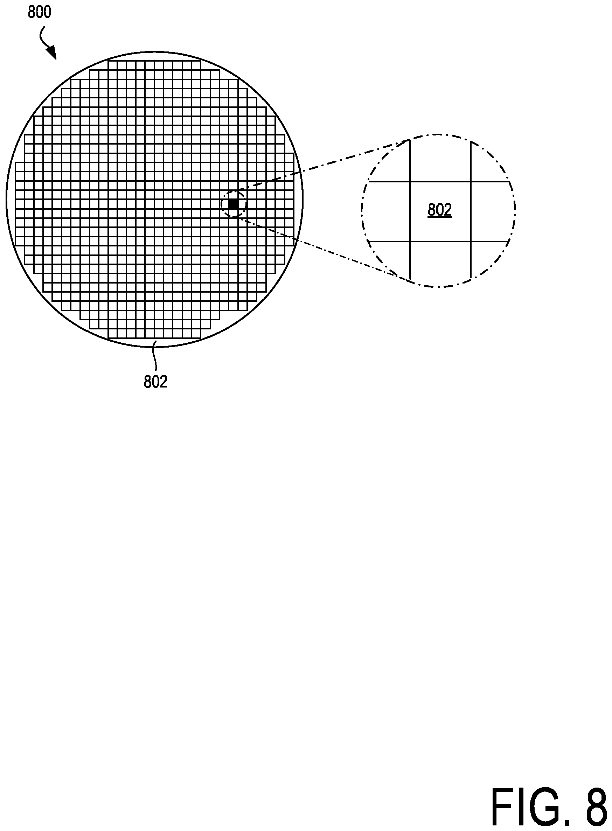

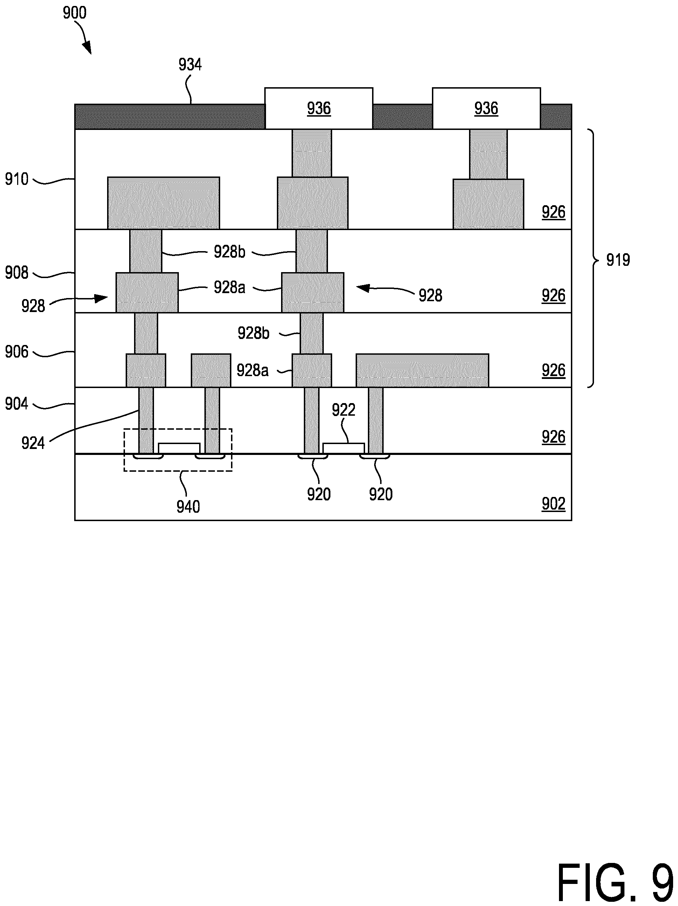

FIG. 8 is a top view of a wafer 800 and dies 802 that may be included in any of the microelectronic assemblies or integrated circuit components disclosed herein. The wafer 800 may be composed of semiconductor material and may include one or more dies 802 having integrated circuit structures formed on a surface of the wafer 800. The individual dies 802 may be a repeating unit of an integrated circuit product that includes any suitable integrated circuit. After the fabrication of the semiconductor product is complete, the wafer 800 may undergo a singulation process in which the dies 802 are separated from one another to provide discrete "chips" of the integrated circuit product. The die 802 may be any of the processing units disclosed herein (108, 112, 116, 120). The die 802 may include one or more transistors (e.g., some of the transistors 940 of FIG. 9, discussed below), supporting circuitry to route electrical signals to the transistors, passive components (e.g., signal traces, resistors, capacitors, or inductors), and/or any other integrated circuit components. In some embodiments, the wafer 800 or the die 802 may include a memory device (e.g., a random access memory (RAM) device, such as a static RAM (SRAM) device, a magnetic RAM (MRAM) device, a resistive RAM (RRAM) device, a conductive-bridging RAM (CBRAM) device, etc.), a logic device (e.g., an AND, OR, NAND, or NOR gate), or any other suitable circuit element. Multiple ones of these devices may be combined on a single die 802. For example, a memory array formed by multiple memory devices may be formed on a same die 802 as a processor unit or other logic that is configured to store information in the memory devices or execute instructions stored in the memory array. Various ones of the microelectronic assemblies disclosed herein may be manufactured using a die-to-wafer assembly technique in which some dies 802are attached to a wafer 800 that include others of the dies 802, and the wafer 800 is subsequently singulated.

FIG. 9 is a cross-sectional view of an integrated circuit device 900 that may be included in any of the microelectronic assemblies or integrated circuit components disclosed herein (e.g., in any of the dies 802). One or more of the integrated circuit devices 900 may be included in one or more dies 802 (FIG. 8). The integrated circuit device 900 may be formed on a die substrate 902 (e.g., the wafer 800 of FIG. 8) and may be included in a die (e.g., the die 802 of FIG. 8). The die substrate 902 may be a semiconductor substrate composed of semiconductor material systems including, for example, n-type or p-type materials systems (or a combination of both). The die substrate 902 may include, for example, a crystalline substrate formed using a bulk silicon or a silicon-on-insulator (SOI) substructure. In some embodiments, the die substrate 902 may be formed using alternative materials, which may or may not be combined with silicon, that include, but are not limited to, germanium, indium antimonide, lead telluride, indium arsenide, indium phosphide, gallium arsenide, or gallium antimonide. Further materials classified as group II-VI, III-V, or IV may also be used to form the die substrate 902. Although a few examples of materials from which the die substrate 902 may be formed are described here, any material that may serve as a foundation for an integrated circuit device 900 may be used. The die substrate 902 may be part of a singulated die (e.g., the dies 802 of FIG. 8) or a wafer (e.g., the wafer 800 of FIG. 8).

The integrated circuit device 900 may include one or more device layers 904 disposed on the die substrate 902. The device layer 904 may include features of one or more transistors 940 (e.g., metal oxide semiconductor field-effect transistors (MOSFETs)) formed on the die substrate 902. The transistors 940 may include, for example, one or more source and/or drain (S/D) regions 920, a gate 922 to control current flow between the S/D regions 920, and one or more S/D contacts 924 to route electrical signals to/from the S/D regions 920. The transistors 940 may include additional features not depicted for the sake of clarity, such as device isolation regions, gate contacts, and the like. The transistors 940 are not limited to the type and configuration depicted in FIG. 9 and may include a wide variety of other types and configurations such as, for example, planar transistors, non-planar transistors, or a combination of both. Non- planar transistors may include FinFET transistors, such as double-gate transistors or tri-gate transistors, and wrap-around or all-around gate transistors, such as nanoribbon, nanosheet, or nanowire transistors. A transistor 940 may include a gate 922 formed of at least two layers, a gate dielectric, and a gate electrode. The gate dielectric may include one layer or a stack of layers. The one or more layers may include silicon oxide, silicon dioxide, silicon carbide, and/or a high-k dielectric material.

The high-k dielectric material may include elements such as hafnium, silicon, oxygen, titanium, tantalum, lanthanum, aluminum, zirconium, barium, strontium, yttrium, lead, scandium, niobium, and zinc. Examples of high-k materials that may be used in the gate dielectric include, but are not limited to, hafnium oxide, hafnium silicon oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate. In some embodiments, an annealing process may be carried out on the gate dielectric to improve its quality when a high-k material is used.

The gate electrode may be formed on the gate dielectric and may include at least one p-type work function metal or n-type work function metal, depending on whether the transistor 940 is to be a p-type metal oxide semiconductor (PMOS) or an n-type metal oxide semiconductor (NMOS) transistor. In some implementations, the gate electrode may consist of a stack of two or more metal layers, where one or more metal layers are work function metal layers and at least one metal layer is a fill metal layer. Further metal layers may be included for other purposes, such as a barrier layer.

For a PMOS transistor, metals that may be used for the gate electrode include, but are not limited to, ruthenium, palladium, platinum, cobalt, nickel, conductive metal oxides (e.g., ruthenium oxide), and any of the metals discussed below with reference to an NMOS transistor (e.g., for work function tuning). For an NMOS transistor, metals that may be used for the gate electrode include, but are not limited to, hafnium, zirconium, titanium, tantalum, aluminum, alloys of these metals, carbides of these metals (e.g., hafnium carbide, zirconium carbide, titanium carbide, tantalum carbide, and aluminum carbide), and any of the metals discussed above with reference to a PMOS transistor (e.g., for work function tuning).

In some embodiments, when viewed as a cross-section of the transistor 940 along the source-channel-drain direction, the gate electrode may consist of a U-shaped structure that includes a bottom portion substantially parallel to the surface of the die substrate 902 and two sidewall portions that are substantially perpendicular to the top surface of the die substrate 902. In other embodiments, at least one of the metal layers that form the gate electrode may simply be a planar layer that is substantially parallel to the top surface of the die substrate 902 and does not include sidewall portions substantially perpendicular to the top surface of the die substrate 902. In other embodiments, the gate electrode may consist of a combination of U-shaped structures and planar, non-U-shaped structures. For example, the gate electrode may consist of one or more U-shaped metal layers formed atop one or more planar, non-U-shaped layers.

In some embodiments, a pair of sidewall spacers may be formed on opposing sides of the gate stack to bracket the gate stack. The sidewall spacers may be formed from materials such as silicon nitride, silicon oxide, silicon carbide, silicon nitride doped with carbon, and silicon oxynitride. Processes for forming sidewall spacers are well known in the art and generally include deposition and etching process steps. In some embodiments, a plurality of spacer pairs may be used; for instance, two pairs, three pairs, or four pairs of sidewall spacers may be formed on opposing sides of the gate stack.

The S/D regions 920 may be formed within the die substrate 902 adjacent to the gate 922 of individual transistors 940. The S/D regions 920 may be formed using an implantation/diffusion process or an etching/deposition process, for example. In the former process, dopants such as boron, aluminum, antimony, phosphorous, or arsenic may be ion-implanted into the die substrate 902 to form the S/D regions 920. An annealing process that activates the dopants and causes them to diffuse farther into the die substrate 902 may follow the ion-implantation process. In the latter process, the die substrate 902 may first be etched to form recesses at the locations of the S/D regions 920. An epitaxial deposition process may then be carried out to fill the recesses with material that is used to fabricate the S/D regions 920. In some implementations, the S/D regions 920 may be fabricated using a silicon alloy such as silicon germanium or silicon carbide. In some embodiments, the epitaxially deposited silicon alloy may be doped in situ with dopants such as boron, arsenic, or phosphorous. In some embodiments, the S/D regions 920 may be formed using one or more alternate semiconductor materials such as germanium or a group III-V material or alloy. In further embodiments, one or more layers of metal and/or metal alloys may be used to form the S/D regions 920.

Electrical signals, such as power and/or input/output (I/O) signals, may be routed to and/or from the devices (e.g., transistors 940) of the device layer 904 through one or more interconnect layers disposed on the device layer 904 (illustrated in FIG. 9 as interconnect layers 906-810). For example, electrically conductive features of the device layer 904 (e.g., the gate 922 and the S/D contacts 924) may be electrically coupled with the interconnect structures 928 of the interconnect layers 906-810. The one or more interconnect layers 906-810 may form a metallization stack (also referred to as an "ILD stack") 919 of the integrated circuit device 900.

The interconnect structures 928 may be arranged within the interconnect layers 906-810 to route electrical signals according to a wide variety of designs; in particular, the arrangement is not limited to the particular configuration of interconnect structures 928 depicted in FIG. 9. Although a particular number of interconnect layers 906-810 is depicted in FIG. 9, embodiments of the present disclosure include integrated circuit devices having more or fewer interconnect layers than depicted.

In some embodiments, the interconnect structures 928 may include lines 928a and/or vias 928b filled with an electrically conductive material such as a metal. The lines 928a may be arranged to route electrical signals in a direction of a plane that is substantially parallel with a surface of the die substrate 902 upon which the device layer 904 is formed. For example, the lines 928a may route electrical signals in a direction in and out of the page and/or in a direction across the page from the perspective of FIG. 9. The vias 928b may be arranged to route electrical signals in a direction of a plane that is substantially perpendicular to the surface of the die substrate 902 upon which the device layer 904 is formed. In some embodiments, the vias 928b may electrically couple lines 928a of different interconnect layers 906-810 together.

The interconnect layers 906-910 may include a dielectric material 926 disposed between the interconnect structures 928, as shown in FIG. 9. In some embodiments, dielectric material 926 disposed between the interconnect structures 928 in different ones of the interconnect layers 906-810 may have different compositions; in other embodiments, the composition of the dielectric material 926 between different interconnect layers 906-810 may be the same. The device layer 904 may include a dielectric material 926 disposed between the transistors 940 and a bottom layer of the metallization stack as well. The dielectric material 926 included in the device layer 904 may have a different composition than the dielectric material 926 included in the interconnect layers 906-810; in other embodiments, the composition of the dielectric material 926 in the device layer 904 may be the same as a dielectric material 926 included in any one of the interconnect layers 906-810.

A first interconnect layer 906 (referred to as Metal 1 or "M1") may be formed directly on the device layer 904. In some embodiments, the first interconnect layer 906 may include lines 928a and/or vias 928b, as shown. The lines 928a of the first interconnect layer 906 may be coupled with contacts (e.g., the S/D contacts 924) of the device layer 904. The vias 928b of the first interconnect layer 906 may be coupled with the lines 928a of a second interconnect layer 908.

The second interconnect layer 908 (referred to as Metal 2 or "M2") may be formed directly on the first interconnect layer 906. In some embodiments, the second interconnect layer 908 may include via 928b to couple the lines 928 of the second interconnect layer 908 with the lines 928a of a third interconnect layer 910. Although the lines 928a and the vias 928b are structurally delineated with a line within individual interconnect layers for the sake of clarity, the lines 928a and the vias 928b may be structurally and/or materially contiguous (e.g., simultaneously filled during a dual-damascene process) in some embodiments.

The third interconnect layer 910 (referred to as Metal 3 or "M3") (and additional interconnect layers, as desired) may be formed in succession on the second interconnect layer 908 according to similar techniques and configurations described in connection with the second interconnect layer 908 or the first interconnect layer 906. In some embodiments, the interconnect layers that are "higher up" in the metallization stack 919 in the integrated circuit device 900 (i.e., farther away from the device layer 904) may be thicker that the interconnect layers that are lower in the metallization stack 919, with lines 928a and vias 928b in the higher interconnect layers being thicker than those in the lower interconnect layers.

The integrated circuit device 900 may include a solder resist material 934 (e.g., polyimide or similar material) and one or more conductive contacts 936 formed on the interconnect layers 906-810. In FIG. 9, the conductive contacts 936 are illustrated as taking the form of bond pads. The conductive contacts 936 may be electrically coupled with the interconnect structures 928 and configured to route the electrical signals of the transistor(s) 940 to external devices. For example, solder bonds may be formed on the one or more conductive contacts 936 to mechanically and/or electrically couple an integrated circuit die including the integrated circuit device 900 with another component (e.g., a printed circuit board). The integrated circuit device 900 may include additional or alternate structures to route the electrical signals from the interconnect layers 906-810; for example, the conductive contacts 936 may include other analogous features (e.g., posts) that route the electrical signals to external components.

In some embodiments in which the integrated circuit device 900 is a double-sided die, the integrated circuit device 900 may include another metallization stack (not shown) on the opposite side of the device layer(s) 904. This metallization stack may include multiple interconnect layers as discussed above with reference to the interconnect layers 906-810, to provide conductive pathways (e.g., including conductive lines and vias) between the device layer(s) 904 and additional conductive contacts (not shown) on the opposite side of the integrated circuit device 900 from the conductive contacts 936.

In other embodiments in which the integrated circuit device 900 is a double-sided die, the integrated circuit device 900 may include one or more through silicon vias (TSVs) through the die substrate 902; these TSVs may make contact with the device layer(s) 904, and may provide conductive pathways between the device layer(s) 904 and additional conductive contacts (not shown) on the opposite side of the integrated circuit device 900 from the conductive contacts 936. In some embodiments, TSVs extending through the substrate can be used for routing power and ground signals from conductive contacts on the opposite side of the integrated circuit device 900 from the conductive contacts 936 to the transistors 940 and any other components integrated into the die 900, and the metallization stack 919 can be used to route I/O signals from the conductive contacts 936 to transistors 940 and any other components integrated into the die 900.

Multiple integrated circuit devices 900 may be stacked with one or more TSVs in the individual stacked devices providing connection between one of the devices to any of the other devices in the stack. For example, one or more high-bandwidth memory (HBM) integrated circuit dies can be stacked on top of a base integrated circuit die and TSVs in the HBM dies can provide connection between the individual HBM and the base integrated circuit die. Conductive contacts can provide additional connections between adjacent integrated circuit dies in the stack. In some embodiments, the conductive contacts can be fine-pitch solder bumps (microbumps).

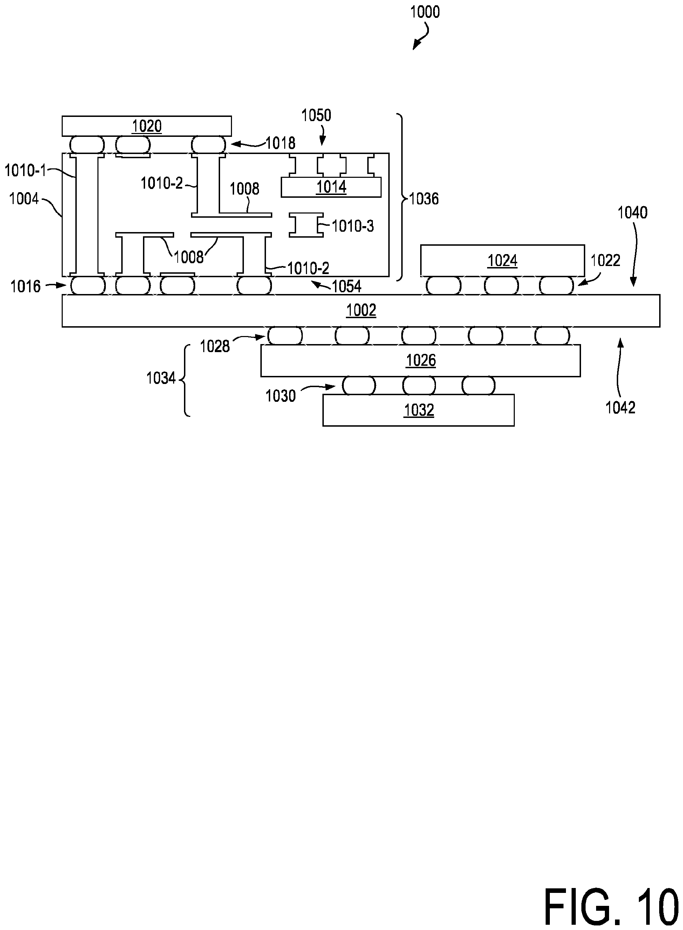

FIG. 10 is a cross-sectional side of an integrated circuit device assembly 1000 that may include any of the microelectronic assemblies or integrated circuit components disclosed herein. The integrated circuit device assembly 1000 includes a number of components disposed on a circuit board 1002 (which may be a motherboard, system board, mainboard, etc.). The integrated circuit device assembly 1000 includes components disposed on a first face 1040 of the circuit board 1002 and an opposing second face 1042 of the circuit board 1002; generally, components may be disposed on one or both faces 1040 and 1042. Any of the integrated circuit components discussed below with reference to the integrated circuit device assembly 1000 may take the form of any suitable ones of the embodiments of the microelectronic assemblies disclosed herein.

In some embodiments, the circuit board 1002 may be a printed circuit board (PCB) including multiple metal (or interconnect) layers separated from one another by layers of dielectric material and interconnected by electrically conductive vias. The individual metal layers comprise conductive traces. Any one or more of the metal layers may be formed in a desired circuit pattern to route electrical signals (optionally in conjunction with other metal layers) between the components coupled to the circuit board 1002. In other embodiments, the circuit board 1002 may be a non-PCB substrate. In some embodiments the circuit board 1002 may be, for example, an integrated circuit component substrate (104) or a circuit board 1002 to which a socket (168) is attached. The integrated circuit device assembly 1000 illustrated in FIG. 10 includes a package-on-interposer structure 1036 coupled to the first face 1040 of the circuit board 1002 by coupling components 1016. The coupling components 1016 may electrically and mechanically couple the package-on-interposer structure 1036 to the circuit board 1002, and may include solder balls (as shown in FIG. 10), pins (e.g., as part of a pin grid array (PGA), contacts (e.g., as part of a land grid array (LGA)), male and female portions of a socket, an adhesive, an underfill material, and/or any other suitable electrical and/or mechanical coupling structure. The coupling components 1016 may serve as the coupling components illustrated or described for any of the substrate assembly or substrate assembly components described herein, as appropriate.

The package-on-interposer structure 1036 may include an integrated circuit component 1020 coupled to an interposer 1004 by coupling components 1018. The coupling components 1018 may take any suitable form for the application, such as the forms discussed above with reference to the coupling components 1016. Although a single integrated circuit component 1020 is shown in FIG. 10, multiple integrated circuit components may be coupled to the interposer 1004; indeed, additional interposers may be coupled to the interposer 1004. The interposer 1004 may provide an intervening substrate used to bridge the circuit board 1002 and the integrated circuit component 1020.

The integrated circuit component 1020 may be a packaged or unpacked integrated circuit product that includes one or more integrated circuit dies (e.g., the die 802 of FIG. 8, the integrated circuit device 900 of FIG. 9) and/or one or more other suitable components. A packaged integrated circuit component comprises one or more integrated circuit dies mounted on a component substrate with the integrated circuit dies and component substrate encapsulated in a casing material, such as a metal, plastic, glass, or ceramic. In one example of an unpackaged integrated circuit component 1020, a single monolithic integrated circuit die comprises solder bumps attached to contacts on the die. The solder bumps allow the die to be directly attached to the interposer 1004. The integrated circuit component 1020 can comprise one or more computing system components, such as one or more processor units (e.g., system-on-a-chip (SoC), processor core, graphics processor unit (GPU), accelerator, chipset processor), I/O controller, memory, or network interface controller. In some embodiments, the integrated circuit component 1020 can comprise one or more additional active or passive devices such as capacitors, decoupling capacitors, resistors, inductors, fuses, diodes, transformers, sensors, electrostatic discharge (ESD) devices, and memory devices.

In embodiments where the integrated circuit component 1020 comprises multiple integrated circuit dies, they dies can be of the same type (a homogeneous multi-die integrated circuit component) or of two or more different types (a heterogeneous multi-die integrated circuit component). A multi-die integrated circuit component can be referred to as a multi-chip package (MCP) or multi-chip module (MCM).

In addition to comprising one or more processor units, the integrated circuit component 1020 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets". In embodiments where an integrated circuit component comprises multiple integrated circuit dies, the integrated circuit dies can be conductively coupled by one or more conductive traces (and vias between the conductive traces if the conductive traces are on multiple layers and/or if the conductive traces are embedded in the substrate, bridge, or interposer) of the component substrate, one or more silicon interposers, one or more silicon bridges embedded in the component substrate, or combinations thereof.

Generally, the interposer 1004 may spread connections to a wider pitch or reroute a connection to a different connection. For example, the interposer 1004 may couple the integrated circuit component 1020 to a set of ball grid array (BGA) conductive contacts of the coupling components 1016 for coupling to the circuit board 1002. In the embodiment illustrated in FIG. 10, the integrated circuit component 1020 and the circuit board 1002 are attached to opposing sides of the interposer 1004; in other embodiments, the integrated circuit component 1020 and the circuit board 1002 may be attached to a same side of the interposer 1004. In some embodiments, three or more components may be interconnected by way of the interposer 1004.

In some embodiments, the interposer 1004 may be formed as a PCB, including multiple metal layers separated from one another by layers of dielectric material and interconnected by electrically conductive vias. In some embodiments, the interposer 1004 may be formed of an epoxy resin, a fiberglass-reinforced epoxy resin, an epoxy resin with inorganic fillers, a ceramic material, or a polymer material such as polyimide. In some embodiments, the interposer 1004 may be formed of alternate rigid or flexible materials that may include the same materials described above for use in a semiconductor substrate, such as silicon, germanium, and other group III-V and group IV materials. The interposer 1004 may include metal interconnects 1008 and vias 1010, including but not limited to through hole vias 1010-1 (that extend from a first face 1050 of the interposer 1004 to a second face 1054 of the interposer 1004), blind vias 1010-2 (that extend from the first or second faces 1050 or 1054 of the interposer 1004 to an internal metal layer), and buried vias 1010-3 (that connect internal metal layers).

In some embodiments, the interposer 1004 can comprise a silicon interposer. Through silicon vias (TSV) extending through the silicon interposer can connect connections on a first face of a silicon interposer to an opposing second face of the silicon interposer. In some embodiments, an interposer 1004 comprising a silicon interposer can further comprise one or more routing layers to route connections on a first face of the interposer 1004 to an opposing second face of the interposer 1004.

The interposer 1004 may further include embedded devices 1014, including both passive and active devices. Such devices may include, but are not limited to, capacitors, decoupling capacitors, resistors, inductors, fuses, diodes, transformers, sensors, electrostatic discharge (ESD) devices, and memory devices. More complex devices such as radio frequency devices, power amplifiers, power management devices, antennas, arrays, sensors, and microelectromechanical systems (MEMS) devices may also be formed on the interposer 1004. The package-on-interposer structure 1036 may take the form of any of the package-on-interposer structures known in the art. In embodiments where the interposer is a non-printed circuit board

The integrated circuit device assembly 1000 may include an integrated circuit component 1024 coupled to the first face 1040 of the circuit board 1002 by coupling components 1022. The coupling components 1022 may take the form of any of the embodiments discussed above with reference to the coupling components 1016, and the integrated circuit component 1024 may take the form of any of the embodiments discussed above with reference to the integrated circuit component 1020.

The integrated circuit device assembly 1000 illustrated in FIG. 10 includes a package-on-package structure 1034 coupled to the second face 1042 of the circuit board 1002 by coupling components 1028. The package-on-package structure 1034 may include an integrated circuit component 1026 and an integrated circuit component 1032 coupled together by coupling components 1030 such that the integrated circuit component 1026 is disposed between the circuit board 1002 and the integrated circuit component 1032. The coupling components 1028 and 1030 may take the form of any of the embodiments of the coupling components 1016 discussed above, and the integrated circuit components 1026 and 1032 may take the form of any of the embodiments of the integrated circuit component 1020 discussed above. The package-on-package structure 1034 may be configured in accordance with any of the package-on-package structures known in the art.

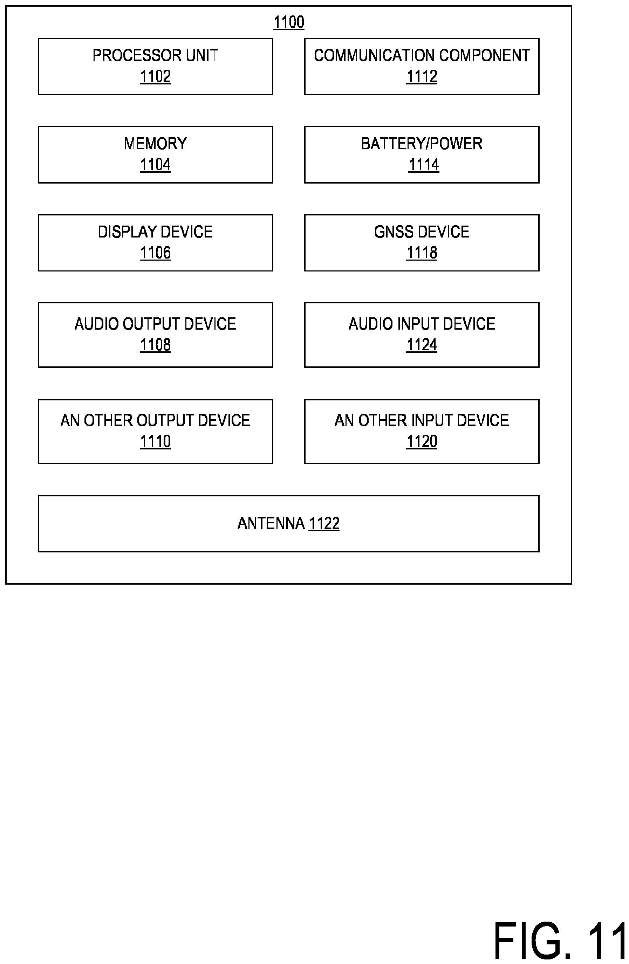

FIG. 11 is a block diagram of an example electrical device 1100 that may include one or more of the microelectronic assemblies or integrated circuit components disclosed herein. For example, any suitable ones of the components of the electrical device 1100 may include one or more of the integrated circuit device assemblies, integrated circuit components, integrated circuit devices, or integrated circuit dies disclosed herein, and may be arranged in any of the microelectronic assemblies disclosed herein. A number of components are illustrated in FIG. 11 as included in the electrical device 1100, but any one or more of these components may be omitted or duplicated, as suitable for the application. In some embodiments, some or all of the components included in the electrical device 1100 may be attached to one or more motherboards mainboards, or system boards. In some embodiments, one or more of these components are fabricated onto a single system-on-a-chip (SoC) die.

Additionally, in various embodiments, the electrical device 1100 may not include one or more of the components illustrated in FIG. 11, but the electrical device 1100 may include interface circuitry for coupling to the one or more components. For example, the electrical device 1100 may not include a display device 1106, but may include display device interface circuitry (e.g., a connector and driver circuitry) to which a display device 1106 may be coupled. In another set of examples, the electrical device 1100 may not include an audio input device 1124 or an audio output device 1108, but may include audio input or output device interface circuitry (e.g., connectors and supporting circuitry) to which an audio input device 1124 or audio output device 1108 may be coupled.

The electrical device 1100 may include one or more processor units 1102 (e.g., one or more processor units). As used herein, the terms "processor unit", "processing unit" or "processor" may refer to any device or portion of a device that processes electronic data from registers and/or memory to transform that electronic data into other electronic data that may be stored in registers and/or memory. The processor unit 1102 may include one or more digital signal processors (DSPs), application-specific integrated circuits (ASICs), central processing units (CPUs), graphics processing units (GPUs), general-purpose GPUs (GPGPUs), accelerated processing units (APUs), field-programmable gate arrays (FPGAs), neural network processing units (NPUs), data processor units (DPUs), accelerators (e.g., graphics accelerator, compression accelerator, artificial intelligence accelerator), controller cryptoprocessors (specialized processors that execute cryptographic algorithms within hardware), server processors, controllers, or any other suitable type of processor units. As such, the processor unit can be referred to as an XPU (or xPU).

The electrical device 1100 may include a memory 1104, which may itself include one or more memory devices such as volatile memory (e.g., dynamic random-access memory (DRAM), static random-access memory (SRAM)), non-volatile memory (e.g., read-only memory (ROM), flash memory, chalcogenide-based phase-change non-voltage memories), solid state memory, and/or a hard drive. In some embodiments, the memory 1104 may include memory that is located on the same integrated circuit die as the processor unit 1102. This memory may be used as cache memory (e.g., Level 1 (L1), Level 2 (L2), Level 3 (L3), Level 4 (L4), Last Level Cache (LLC)) and may include embedded dynamic random-access memory (eDRAM) or spin transfer torque magnetic random-access memory (STT-MRAM).

In some embodiments, the electrical device 1100 can comprise one or more processor units 1102 that are heterogeneous or asymmetric to another processor unit 1102 in the electrical device 1100. There can be a variety of differences between the processing units 1102 in a system in terms of a spectrum of metrics of merit including architectural, microarchitectural, thermal, power consumption characteristics, and the like. These differences can effectively manifest themselves as asymmetry and heterogeneity among the processor units 1102 in the electrical device 1100.

In some embodiments, the electrical device 1100 may include a communication component 1112 (e.g., one or more communication components). For example, the communication component 1112 can manage wireless communications for the transfer of data to and from the electrical device 1100. The term "wireless" and its derivatives may be used to describe circuits, devices, systems, methods, techniques, communications channels, etc., that may communicate data through the use of modulated electromagnetic radiation through a nonsolid medium. The term "wireless" does not imply that the associated devices do not contain any wires, although in some embodiments they might not.

The communication component 1112 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication component 1112 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication component 1112 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication component 1112 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication component 1112 may operate in accordance with other wireless protocols in other embodiments. The electrical device 1100 may include an antenna 1122 to facilitate wireless communications and/or to receive other wireless communications (such as AM or FM radio transmissions).

In some embodiments, the communication component 1112 may manage wired communications, such as electrical, optical, or any other suitable communication protocols (e.g., IEEE 802.3 Ethernet standards). As noted above, the communication component 1112 may include multiple communication components. For instance, a first communication component 1112 may be dedicated to shorter-range wireless communications such as Wi-Fi or Bluetooth, and a second communication component 1112 may be dedicated to longer-range wireless communications such as global positioning system (GPS), EDGE, GPRS, CDMA, WiMAX, LTE, EV-DO, or others. In some embodiments, a first communication component 1112 may be dedicated to wireless communications, and a second communication component 1112 may be dedicated to wired communications.

The electrical device 1100 may include battery/power circuitry 1114. The battery/power circuitry 1114 may include one or more energy storage devices (e.g., batteries or capacitors) and/or circuitry for coupling components of the electrical device 1100 to an energy source separate from the electrical device 1100 (e.g., AC line power).

The electrical device 1100 may include a display device 1106 (or corresponding interface circuitry, as discussed above). The display device 1106 may include one or more embedded or wired or wirelessly connected external visual indicators, such as a heads-up display, a computer monitor, a projector, a touchscreen display, a liquid crystal display (LCD), a light-emitting diode display, or a flat panel display.

The electrical device 1100 may include an audio output device 1108 (or corresponding interface circuitry, as discussed above). The audio output device 1108 may include any embedded or wired or wirelessly connected external device that generates an audible indicator, such speakers, headsets, or earbuds.

The electrical device 1100 may include an audio input device 1124 (or corresponding interface circuitry, as discussed above). The audio input device 1124 may include any embedded or wired or wirelessly connected device that generates a signal representative of a sound, such as microphones, microphone arrays, or digital instruments (e.g., instruments having a musical instrument digital interface (MIDI) output). The electrical device 1100 may include a Global Navigation Satellite System (GNSS) device 1118 (or corresponding interface circuitry, as discussed above), such as a Global Positioning System (GPS) device. The GNSS device 1118 may be in communication with a satellite-based system and may determine a geolocation of the electrical device 1100 based on information received from one or more GNSS satellites, as known in the art.

The electrical device 1100 may include an other output device 1110 (or corresponding interface circuitry, as discussed above). Examples of the other output device 1110 may include an audio codec, a video codec, a printer, a wired or wireless transmitter for providing information to other devices, or an additional storage device.

The electrical device 1100 may include an other input device 1120 (or corresponding interface circuitry, as discussed above). Examples of the other input device 1120 may include an accelerometer, a gyroscope, a compass, an image capture device (e.g., monoscopic or stereoscopic camera), a trackball, a trackpad, a touchpad, a keyboard, a cursor control device such as a mouse, a stylus, a touchscreen, proximity sensor, microphone, a bar code reader, a Quick Response (QR) code reader, electrocardiogram (ECG) sensor, PPG (photoplethysmogram) sensor, galvanic skin response sensor, any other sensor, or a radio frequency identification (RFID) reader.

The electrical device 1100 may have any desired form factor, such as a hand-held or mobile electrical device (e.g., a cell phone, a smart phone, a mobile internet device, a music player, a tablet computer, a laptop computer, a 2-in-1 convertible computer, a portable all-in-one computer, a netbook computer, an ultrabook computer, a personal digital assistant (PDA), an ultra mobile personal computer, a portable gaming console, etc.), a desktop electrical device, a server, a rack-level computing solution (e.g., blade, tray or sled computing systems), a workstation or other networked computing component, a printer, a scanner, a monitor, a set-top box, an entertainment control unit, a stationary gaming console, smart television, a vehicle control unit, a digital camera, a digital video recorder, a wearable electrical device or an embedded computing system (e.g., computing systems that are part of a vehicle, smart home appliance, consumer electronics product or equipment, manufacturing equipment). In some embodiments, the electrical device 1100 may be any other electronic device that processes data. In some embodiments, the electrical device 1100 may comprise multiple discrete physical components. Given the range of devices that the electrical device 1100 can be manifested as in various embodiments, in some embodiments, the electrical device 1100 can be referred to as a computing device or a computing system.

As used in this application and the claims, a list of items joined by the term "and/or" can mean any combination of the listed items. For example, the phrase "A, B and/or C" can mean A; B; C; A and B; A and C; B and C; or A, B and C. As used in this application and the claims, a list of items joined by the term "at least one of" can mean any combination of the listed terms. For example, the phrase "at least one of A, B or C" can mean A; B; C; A and B; A and C; B and C; or A, B, and C. Moreover, as used in this application and the claims, a list of items joined by the term "one or more of' can mean any combination of the listed terms. For example, the phrase "one or more of A, B and C" can mean A; B; C; A and B; A and C; B and C; or A, B, and C.

As used in this application and the claims, the phrase "individual of" or "respective of" following by a list of items recited or stated as having a trait, feature, etc. means that all of the items in the list possess the stated or recited trait, feature, etc. For example, the phrase "individual of A, B, or C, comprise a sidewall" or "respective of A, B, or C, comprise a sidewall" means that A comprises a sidewall, B comprises sidewall, and C comprises a sidewall.

The disclosed methods, apparatuses, and systems are not to be construed as limiting in any way. Instead, the present disclosure is directed toward all novel and nonobvious features and aspects of the various disclosed embodiments, alone and in various combinations and subcombinations with one another. The disclosed methods, apparatuses, and systems are not limited to any specific aspect or feature or combination thereof, nor do the disclosed embodiments require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

The following examples pertain to additional embodiments of technologies disclosed herein.

Example 1 includes an apparatus comprising an integrated circuit component comprising a substrate, the substrate comprising a cutout; a processing unit attached to the substrate, the a processing unit comprising a processing unit conductive contact on a surface of the processing unit; and a photonic integrated circuit (PIC) comprising a waveguide and a PIC conductive contact on a surface of the PIC, the processing unit conductive contact attached to the PIC conductive contact, the waveguide extending to an edge of the PIC, the edge of the PIC substantially flush with a wall of the cutout or extending into the cutout.

Example 2 includes the subject matter of Example 1, wherein the cutout extends from a top surface of the substrate to a bottom surface of the substrate.

Example 3 includes the subject matter of Example 1, wherein the cutout extends partially through the substrate from a top surface of the substrate.

Example 4 includes the subject matter of Example 1, wherein the substrate further comprises a recess in a top surface of the substrate, the PIC is at least partially located in the recess, and the PIC conductive contact is attached to the processing unit conductive contact.

Example 5 includes the subject matter of any one of Examples 1-4, further comprising an attachment block, an edge of the attachment block substantially flush with the edge of the PIC.

Example 6 includes the subject matter of Example 5, wherein the attachment block comprises glass.

Example 7 includes the subject matter of Example 5 or 6, further comprising an integrated heat spreader that does not cover the attachment block.

Example 8 includes the subject matter of any one of Examples 1-6, further comprising an integrated heat spreader, wherein the integrated heat spreader defines a maximum height of the integrated circuit component.

Example 9 includes the subject matter of any one of Examples 1-6, further comprising an integrated heat spreader, wherein the integrated heat spreader is U-shaped and surrounds three sides of the cutout.

Example 10 includes the subject matter of Example 9, further including a plurality of conductive contacts on a bottom surface of the substrate, the plurality of conductive contacts collectively occupying a U-shaped area, that surrounds the three sides of the cutout.

Example 11 includes the subject matter of any one of Examples 1-10, wherein the cutout is a first cutout, the waveguide is a first waveguide, the PIC is a first PIC, the processing unit is a first processing unit, the processing unit conductive contact is a first processing unit conductive contact, the substrate further comprising a second cutout, the apparatus further comprising a second processing unit attached to the substrate, the second processing unit comprising a second processing unit conductive contact on a surface of the second processing unit; and a second PIC comprising a second waveguide and a second PIC conductive contact on a surface of the second PIC, the second processing unit conductive contact conductively coupled to the second PIC conductive contact, wherein the second waveguide extends to an edge of the second PIC, the edge of the second PIC substantially flush with a wall of the second cutout or extending in the second cutout.

Example 12 includes an apparatus comprising an integrated circuit component comprising a substrate, the substrate comprising a cutout; a processing unit attached to the substrate, the processing unit comprising an processing unit conductive contact on a surface of the processing unit; a photonic integrated circuit (PIC) comprising a waveguide and a PIC conductive contact on a surface of the PIC, the processing unit conductive contact attached to the PIC conductive contact, the waveguide extending to an edge of the PIC, the edge of the PIC coplanar with a wall of the cutout or extending into the cutout; and a fiber attach unit comprising an optical fiber, the optical fiber attached to the waveguide, at least a portion of the fiber attach unit extending into the cutout.

Example 13 includes the subject matter of Example 12, wherein the cutout extends from a top surface of the substrate to a bottom surface of the substrate.

Example 14 includes the subject matter of Example 12, wherein the cutout extends partially through the substrate from a top surface of the substrate.

Example 15 includes the subject matter of Example 12, wherein the substrate further comprises a recess in a top surface of the substrate, the PIC at least partially located in the recess, and the PIC conductive contact is attached to the processing unit conductive contact.

Example 16 includes the subject matter of any one of Examples 12-15, further comprising an attachment block, an edge of the attachment block coplanar with the edge of the PIC, the fiber attach unit attached to the attachment block.

Example 17 includes the subject matter of Example 16, wherein the attachment block comprises glass.

Example 18 includes the subject matter of Example 16 or 17, further comprising an integrated heat spreader that does not cover the attachment block.

Example 19 includes the subject matter of any one of Examples 12-18, further comprising an integrated heat spreader, wherein the integrated heat spreader defines a maximum height of the integrated circuit component.

Example 20 includes the subject matter of any one of Examples 12-18, wherein the integrated heat spreader is U-shaped and three sides of the integrated heat spreader surround three sides of the cutout.

Example 21 includes the subject matter of any one of Examples 18-20, further comprising a heat sink attached to the integrated heat spreader, the heat sink having a substantially planar bottom surface attached to the integrated heat spreader, a portion of the bottom surface of the heat sink extending over a portion of the cutout.

Example 22 includes the subject matter of any one of Examples 12-20, wherein the optical fiber is attached to the waveguide by an optical epoxy.

Example 23 includes the subject matter of any one of Examples 12-22, further comprising a retention bar securing the optical fiber to the substrate.

Example 24 includes the subject matter of Example 23, the retention bar securing the optical fiber against the substrate at a location along a sheathed portion of the optical fiber.

Example 25 includes the subject matter of Example 23 or 24, wherein the fiber attach unit and the retention bar are located within a perimeter of the substrate.

Example 26 includes the subject matter of any one of Examples 23-25, wherein the retention bar is fastened to the substrate.

Example 27 includes the subject matter of any one of Examples 23-25, wherein the retention bar is bonded to the substrate.

Example 28 includes the subject matter of any one of Examples 12-27, wherein the cutout is a substrate cutout, the apparatus further comprising a socket comprising a socket cutout that at least partially overlaps with the substrate cutout.

Example 29 includes the subject matter of Example 28, wherein the socket cutout extends through the socket from a top surface of the socket to a bottom surface of the socket.

Example 30 includes the subject matter of Example 28, wherein the socket cutout extends partially through the socket from a top surface of the socket.

Example 31 includes the subject matter of any one of Examples 12-27, wherein the cutout is a first cutout, the waveguide is a first waveguide, the PIC is a first PIC, the processing unit is a first processing unit, the processing unit conductive contact is a first processing unit conductive contact, the fiber attach unit is a first fiber attach unit, the optical fiber is a first optical fiber, the substrate comprising a second cutout, the apparatus further comprising a second processing unit attached to the substrate, the second processing unit comprising a second processing unit conductive contact on a surface of the second processing unit; a second PIC comprising a second waveguide and a second PIC conductive contact on a surface of the second PIC, the second processing unit conductive contact conductively coupled to the second PIC conductive contact, wherein the second waveguide extends to an edge of the second PIC, the edge of the second PIC coplanar with a wall of the second cutout or extending in the second cutout; and a second fiber attach unit comprising a second optical fiber, the second optical fiber attached to the second waveguide, a portion of the second fiber attach unit extending into the second cutout.

Example 32 includes the subject matter of Example 31, wherein the first optical fiber crosses a perimeter of the substrate along a first edge of the substrate and the second optical fiber crosses the perimeter of the substrate along a second edge of the substrate, the first edge of the substrate adjacent to the second edge of the substrate.

Example 33 includes the subject matter of Example 31, wherein the first optical fiber crosses a perimeter of the substrate along a first edge of the substrate and the second optical fiber crosses the perimeter of the substrate along a second edge of the substrate, the first edge of the substrate opposite to the second edge of the substrate.

Example 34 includes the subject matter of any one of Examples 1-33, further comprising a processing unit conductively coupled to the processing unit.

Example 35 includes the subject matter of any one of Examples 1-34, wherein the PIC comprises a light source.

Example 36 includes the subject matter of any one of Examples 1-34, wherein the PIC comprises a laser.

Example 37 includes the subject matter of any one of Examples 1-36, wherein the PIC comprises a photodetector.

Example 38 includes the subject matter of any one of Examples 12-27, the apparatus further comprising a socket, the substrate attached to the socket, the socket attached to a printed circuit board.

Example 39 includes the subject matter of Example 31, further including a memory integrated circuit component attached to the printed circuit board.

Example 40 includes the subject matter of any one of Examples 1-39, wherein the processing unit and the PIC are enclosed in a housing of a computing system.

Example 41 includes a method, comprising forming a cutout in a substrate of an integrated circuit component; and attaching a photonic integrated circuit (PIC) and a processing unit to the substrate, the processing unit comprising a processing unit conductive contact on a surface of the processing unit, the PIC comprising a waveguide and a PIC conductive contact on a surface of the PIC, the waveguide extending to an edge of the PIC, the processing unit conductive contact conductively coupled to the PIC conductive contact, the edge of the PIC coplanar with a wall of the cutout or extending into the cutout.

Example 42 includes the subject matter of Example 41, further including attaching an attachment block to the PIC.

Example 43 includes the subject matter of Example 41, further including attaching a fiber attach unit to the attachment block and the edge of the PIC, a portion of the fiber attach unit extending into the cutout.

Example 44 includes the subject matter of Example 43, wherein the fiber attach unit located at an end of an optical fiber cable, the method further comprising securing the optical fiber cable to the substrate with a retaining bar.

Example 45 includes an apparatus comprising an integrated circuit component comprising a substrate; a processing unit attached to the substrate, the processing unit comprising a processing unit conductive contact on a surface of the processing unit; a photonic integrated circuit (PIC) comprising a waveguide and a PIC conductive contact on a surface of the PIC, the processing unit conductive contact conductively coupled to the PIC conductive contact, wherein the waveguide extends to an edge of the PIC; a fiber attach unit (FAU) attached to an end of an optical fiber cable, the FAU comprising an optical fiber, the FAU attached to the edge of the PIC; and a fiber attach unit attachment means to align the optical fiber to the waveguide and attach the optical fiber to the waveguide.

Example 46 includes the subject matter of Example 45, further comprising a stress relief means to at least partially isolate the FAU from mechanical forces external to the integrated circuit component applied to the optical fiber cable.

## Claims

1. An apparatus comprising:
an integrated circuit component comprising a substrate, the substrate comprising a cutout;
a processing unit attached to the substrate, the processing unit comprising a processing unit conductive contact on a surface of the processing unit; and
a photonic integrated circuit (PIC) comprising a waveguide and a PIC conductive contact on a surface of the PIC, the processing unit conductive contact attached to the PIC conductive contact, the waveguide extending to an edge of the PIC, the edge of the PIC substantially flush with a wall of the cutout or extending into the cutout.

2. The apparatus of claim 1, wherein the cutout extends from a top surface of the substrate to a bottom surface of the substrate.

3. The apparatus of claim 1, wherein the cutout extends partially through the substrate from a top surface of the substrate.

4. The apparatus of claim 1, wherein the substrate further comprises a recess in a top surface of the substrate and the PIC is at least partially located in the recess.

5. The apparatus of any one of claims 1-4, further comprising an attachment block, an edge of the attachment block substantially flush with the edge of the PIC.

6. The apparatus of claim 5, wherein the attachment block comprises glass.

7. The apparatus of claim 5 or 6, further comprising an integrated heat spreader that does not cover the attachment block.

8. The apparatus of any one of claims 1-6, further comprising an integrated heat spreader, wherein the integrated heat spreader defines a maximum height of the integrated circuit component.

9. The apparatus of any one of claims 1-6, further comprising an integrated heat spreader, wherein the integrated heat spreader is U-shaped and surrounds three sides of the cutout.

10. The apparatus of claim 9, further comprising a plurality of conductive contacts on a bottom surface of the substrate, the plurality of conductive contacts collectively occupying a U-shaped area, that surrounds the three sides of the cutout.

11. The apparatus of any one of claims 1-10, further comprising:
a fiber attach unit comprising an optical fiber, the optical fiber attached to the waveguide, at least a portion of the fiber attach unit extending into the cutout.

12. The apparatus of claim 11, further comprising a retention bar securing the optical fiber to the substrate.

13. The apparatus of claim 12, wherein the fiber attach unit and the retention bar are located within a perimeter of the substrate.

14. The apparatus of any one of claims 1-13, wherein the PIC comprises a light source, a laser, or a photodetector.

15. The apparatus of any one of claims 1-14, the apparatus further comprising a socket, the substrate attached to the socket, the socket attached to a printed circuit board.
